# EUROPEAN PATENT APPLICATION

(11) **EP 4 518 187 A1**
(43) Date of publication of application: **05.03.2025**
(21) Application number: 23794738.7
(22) Date of filing: 27.02.2023
(51) Int. Cl.: H04B 7/155

(54) **TIME SLOT CONFIGURATION METHOD AND DEVICE, REPEATER, BASE STATION, AND STORAGE MEDIUM**

(30) Priority: 29.04.2022 CN 202210469113
(71) Applicant: Datang Mobile Communications Equipment Co., Ltd., Beijing 100085 (CN)
(72) Inventor: LI, Xiaojiao, Beijing 100085 (CN); WANG, Junwei, Beijing 100085 (CN)
(74) Representative: Studio Torta S.p.A.
(86) International application number: PCT/CN2023/078493
(87) International publication number: WO 2023/207302

(57) **Abstract**

The present disclosure provides a time slot configuration method, an apparatus, a repeater, a base station and a storage medium, in which time slot configuration information of the base station and a time slot processing mode for the repeater are obtained (S201); and a time slot for the repeater is configured according to the time slot configuration information and the time slot processing mode (S202). Through this solution, uplink and downlink time slots can be configured for a repeater while avoiding the repeater from frequently reading scheduling information. In addition, a situation where a terminal or the base station cannot effectively send or receive data due to wrong time slot configuration for the repeater can be prevented, thereby ensuring normal communication.

## Description

This disclosure claims priority to Chinese patent application No. 202210469113.0, entitled "TIME SLOT CONFIGURATION METHOD, APPARATUS, REPEATER, BASE STATION AND STORAGE MEDIUM" and filed with the China National Intellectual Property Administration on April 29, 2022, which is incorporated herein by reference in its entirety.

### TECHNICAL FIELD

This disclosure relates to the field of communication technology and, in particular, to a time slot configuration method, an apparatus, a repeater, a base station and a storage medium.

### BACKGROUND

With the rapid development of the mobile communication market, users have increasingly higher requirement for communication quality. By setting up repeaters in dead zones such as outdoor areas, areas inside buildings and underground areas where communication signals are difficult to cover, users' communication needs can be met to the greatest extent.

When a repeater serves a base station, the repeater needs to forward uplink and downlink data according to the time slot information. However, in the related art, there is no relevant solution for configuring time slots for the repeater.

### SUMMARY

This application provides a time slot configuration method, an apparatus, a repeater, a base station and a storage medium for realizing time slot configuration for the repeater.

In a first aspect, the present disclosure provides a time slot configuration method, which is applied to a repeater. The time slot configuration method includes: obtaining time slot configuration information of a base station and a time slot processing mode for the repeater; and configuring a time slot for the repeater according to the time slot configuration information and the time slot processing mode; where the time slot processing mode includes at least one of: a processing mode for an uplink time slot, a processing mode for a downlink time slot, or a processing mode for a flexible time slot.

In some embodiments, the obtaining the time slot configuration information of the base station includes: receiving a first system information block SIB1 sent by the base station; and obtaining the time slot configuration information according to the first SIB1.

In some embodiments, the receiving the first SIB1 sent by the base station includes: in a condition that the repeater accesses the base station, descrambling Type0-PDCCH based on a preset system information-radio network temporary identifier SI-RNTI; determining physical downlink control channel PDCCH information according to the descrambled Type0-PDCCH, where the PDCCH information at least includes resource location information for a physical downlink shared channel PDSCH; and receiving, through a PDCCH, the first SIB1 transmitted over the PDSCH.

In some embodiments, the obtaining the time slot configuration information of the base station includes: receiving first sidelink control information SCI or first medium access control-control element information MAC-CE sent by the base station; and obtaining the time slot configuration information according to the first SCI or the first MAC-CE.

In some embodiments, the receiving the first SCI or the first MAC-CE sent by the base station includes: receiving SCI or MAC-CE sent by the base station; blindly checking the SCI or the MAC-CE, and obtaining the first SCI from the blindly checked SCI, or obtaining the first MAC-CE from the blindly checked MAC-CE.

In some embodiments, the obtaining the time slot configuration information according to the first SCI or the first MAC-CE includes: obtaining a time slot table of the base station in the first SCI or the first MAC-CE; and obtaining the time slot configuration information and the time slot processing mode according to the time slot table of the base station; where the time slot table includes at least one of: an exclusive configuration table corresponding to the repeater, a general configuration table corresponding to the base station, or part or all of configuration rows of the general configuration table; the time slot processing mode includes at least one of: no flexible time slot being configured in the time slot for the repeater, no forwarding operation being performed at any flexible time slot in the time slot for the repeater, and a target row in the time slot for the repeater being used for forwarding data.

In some embodiments, the time slot configuration method further includes: sending an acknowledgement ACK to the base station in a condition that the first SCI or the first MAC-CE sent by the base station is received; or sending a negative acknowledgement NACK to the base station in a condition that the first SCI or the first MAC-CE sent by the base station is not received, where the NACK is used to instruct the base station to resend the first SCI or the first MAC-CE.

In some embodiments, the time slot configuration information includes at least one of:
a period of a downlink-uplink DL-UL pattern of the base station;
a quantity of consecutive full downlink symbols at a beginning of the DL-UL pattern;
a quantity of consecutive downlink symbols following a last full downlink time slot of the DL-UL pattern;
a quantity of consecutive full uplink symbols at an end of the DL-UL pattern; and
a quantity of consecutive uplink symbols in an end of a time slot preceding a first full uplink time slot of the DL-UL pattern.

In some embodiments, the obtaining the time slot processing mode for the repeater includes: receiving a second SIB1 sent by the base station, where the second SIB1 is used to indicate the time slot processing mode for the repeater; and obtaining the time slot processing mode according to the second SIB 1; where in a condition that the time slot processing mode is the processing mode for the flexible time slot, the time slot processing mode for the repeater includes at least one of: no forwarding operation being performed at any of the flexible time slot;
forwarding operation being performed at each of the flexible time slot as per an uplink time slot;
forwarding operation being performed at each of the flexible time slot as per a downlink time slot; and
forwarding operation being performed at some of the flexible time slot as per an uplink time slot, and forwarding operation being performed at some of the flexible time slot as per a downlink time slot.

In some embodiments, the time slot configuration method further includes: receiving a third SIB1 sent by the base station; where the third SIB1 is used to indicate that forwarding operation at a first time slot is performed as per the uplink time slot, and/or that forwarding operation at a second time slot is performed as per the downlink time slot, where the first time slot and the second time slot are any specified time slot in the flexible time slot.

In some embodiments, the configuring the time slot for the repeater according to the time slot configuration information and the time slot processing mode for the repeater includes: determining an initial time slot for the repeater according to the time slot configuration information and the time slot processing mode for the repeater; and extending a flexible time slot in the initial time slot according to flexible time slot extension information, to obtain the time slot for the repeater.

In some embodiments, the extending the flexible time slot in the initial time slot according to the flexible time slot extension information, to obtain the time slot for the repeater includes: receiving second SCI or second MAC-CE sent by the base station, where the second SCI or the second MAC-CE carries the flexible time slot extension information; and extending the flexible time slot in the initial time slot according to the flexible time slot extension information, to obtain the time slot for the repeater; where the flexible time slot extension information includes at least one of:
a total quantity of flexible time slots to be extended;
a first quantity of uplink time slots to be extended; and
a second quantity of downlink time slots to be extended.

In some embodiments, the time slot configuration method further includes: r receiving at least one of a fourth SIB1, third SCI, and third MAC-CE sent by the base station; and determining an effective duration of the time slot configuration information according to the at least one of the fourth SIB1, the third SCI, and the third MAC-CE.

In some embodiments, the time slot configuration method further includes: receiving fourth SCI or fourth MAC-CE sent by the base station; and adjusting the time slot for the repeater according to the fourth SCI or the fourth MAC-CE.

In some embodiments, the adjusting the time slot for the repeater according to the fourth SCI or the fourth MAC-CE includes: in a condition that the time slot configuration information corresponding to the fourth SCI or the fourth MAC-CE is inconsistent with the time slot configuration information corresponding to the first SIB1, determining the time slot configuration information corresponding to the fourth SCI or the fourth MAC-CE as target time slot configuration information; and configuring the time slot for the repeater according to the target time slot configuration information and the time slot processing mode.

In a second aspect, an embodiment of the present disclosure provides a time slot configuration method, which is applied to a base station, and the time slot configuration method includes: sending at least one of a first SIB1, first MAC-CE or first SCI to a repeater, where the at least one of the first SIB1, the first MAC-CE or the first SCI carries time slot configuration information of the base station; where the at least one of the first SIB1, the first MAC-CE or the first SCI is used to instruct the repeater to configure a time slot for the repeater according to the time slot configuration information and a time slot processing mode, where the time slot processing mode includes at least one of: a processing mode for an uplink time slot, a processing mode for a downlink time slot and a processing mode for a flexible time slot.

In some embodiments, the sending the first SIB1 to the repeater includes: scrambling Type0-PDCCH using an SI-RNTI; and sending the first SIB1 to the repeater through the scrambled Type0-PDCCH.

In some embodiments, the sending the first MAC-CE or the first SCI to the repeater includes: sending the first MAC-CE or the first SCI carrying a time slot table of the base station to the repeater, where the first MAC-CE or the first SCI is used to instruct the repeater to obtain the time slot configuration information of the base station; where the time slot table of the base station includes at least one of: an exclusive configuration table corresponding to the repeater, a general configuration table corresponding to the base station, or part or all of configuration rows of the general configuration table, and the time slot processing mode includes at least one of: no flexible time slot being configured in the time slot for the repeater, no forwarding operation being performed at any flexible time slot in the time slot for the repeater, and a target row in the time slot for the repeater being used for forwarding data.

In some embodiments, the time slot configuration method further includes: in a condition that a NACK sent by the repeater is received, resending the first MAC-CE or the first SCI to the repeater, where the NACK is used to indicate that the repeater has not received the first MAC-CE or the first SCI currently.

In some embodiments, the time slot configuration information includes at least one of:
a period of a DL-UL pattern of the base station;
a quantity of consecutive full downlink symbols at a beginning of the DL-UL pattern;
a quantity of consecutive downlink symbols following a last full downlink time slot of the DL-UL pattern;
a quantity of consecutive full uplink symbols at an end of the DL-UL pattern; and
a quantity of consecutive uplink symbols in an end of a time slot preceding a first full uplink time slot of the DL-UL pattern.

In some embodiments, in a condition that the time slot processing mode is the processing mode for the flexible time slot, the processing mode for the flexible time slot for the repeater includes at least one of: no forwarding operation being performed at any of the flexible time slot;
forwarding operation being performed at each of the flexible time slot as per an uplink time slot;
forwarding operation being performed at each of the flexible time slot as per a downlink time slot; and
forwarding operation being performed at some of the flexible time slot as per an uplink time slot, and forwarding operation being performed at some of the flexible time slot as per a downlink time slot.

In some embodiments, the time slot configuration method further includes: sending a third SIB1 to the repeater, where the third SIB1 is used to indicate that forwarding operation at a first time slot is performed as per an uplink time slot, and/or that forwarding operation at a second time slot is performed as per the downlink time slot, where the first time slot and the second time slot are any specified time slot in the flexible time slot.

In some embodiments, the time slot configuration method further includes: sending second SCI or second MAC-CE to the repeater, where the second SCI or the second MAC-CE carries flexible time slot extension information, and the extension information is used to instruct the repeater to extend the flexible time slot for the repeater;
the extension information includes at least one of: a total quantity of flexible time slots to be extended;
a first quantity of uplink time slots to be extended; and
a second quantity of downlink time slots to be extended.

In some embodiments, the time slot configuration method further includes: sending at least one of a fourth SIB1, third SCI, and third MAC-CE to the repeater, where the at least one of the fourth SIB1, the third SCI, and the third MAC-CE is used to indicate an effective duration of the time slot configuration information.

In some embodiments, the time slot configuration method further includes: sending fourth SCI or fourth MAC-CE to the repeater, where the fourth SCI or the fourth MAC-CE is used to instruct the repeater to adjust the time slot for the repeater.

In a third aspect, an embodiment of the present disclosure provides a time slot configuration apparatus, which is applied to a repeater, and the time slot configuration apparatus includes: an obtaining module, configured to obtain time slot configuration information of a base station and a time slot processing mode for the repeater; and a configuration module, configured to configure a time slot for the repeater according to the time slot configuration information and the time slot processing mode;
where the time slot processing mode includes at least one of: a processing mode for an uplink time slot, a processing mode for a downlink time slot, or a processing mode for a flexible time slot.

In some embodiments, the obtaining module is specifically configured to: receive a first system information block SIB1 sent by the base station; and obtain the time slot configuration information according to the first SIB1.

In some embodiments, the obtaining module is specifically configured to: in a condition that the repeater accesses the base station, descramble Type0-PDCCH based on a preset system information-radio network temporary identifier SI-RNTI; determine physical downlink control channel PDCCH information according to the descrambled Type0-PDCCH, where the PDCCH information at least includes resource location information for a physical downlink shared channel PDSCH; and receive, through a PDCCH, the first SIB1 transmitted over the PDSCH.

In some embodiments, the obtaining module is specifically configured to: receive first sidelink control information SCI or first medium access control-control element information MAC-CE sent by the base station; and obtain the time slot configuration information according to the first SCI or the first MAC-CE.

In some embodiments, the obtaining module is specifically configured to: receive SCI or MAC-CE sent by the base station; blindly check the SCI or the MAC-CE, and obtain the first SCI from the blindly checked SCI, or obtain the first MAC-CE from the blindly checked MAC-CE.

In some embodiments, the obtaining module is specifically configured to: obtain a time slot table of the base station in the first SCI or the first MAC-CE; and obtain the time slot configuration information and the time slot processing mode according to the time slot table of the base station; where the time slot table includes at least one of: an exclusive configuration table corresponding to the repeater, a general configuration table corresponding to the base station, or part or all of configuration rows of the general configuration table; the time slot processing mode includes at least one of: no flexible time slot being configured in the time slot for the repeater, no forwarding operation being performed at any flexible time slot in the time slot for the repeater, and a target row in the time slot for the repeater being used for forwarding data.

In some embodiments, the obtaining module is further configured to: send an ACK to the base station in a condition that the first SCI or the first MAC-CE sent by the base station is received; or send a NACK to the base station in a condition that the first SCI or the first MAC-CE sent by the base station is not received, where the NACK is used to instruct the base station to resend the first SCI or the first MAC-CE.

In some embodiments, the time slot configuration information includes at least one of: a period of a downlink-uplink DL-UL pattern of the base station; a quantity of consecutive full downlink symbols at a beginning of the DL-UL pattern;
a quantity of consecutive downlink symbols following a last full downlink time slot of the DL-UL pattern;
a quantity of consecutive full uplink symbols at an end of the DL-UL pattern; and
a quantity of consecutive uplink symbols in an end of a time slot preceding a first full uplink time slot of the DL-UL pattern.

In some embodiments, the obtaining module is specifically configured to: receive a second SIB1 sent by the base station, where the second SIB1 is used to indicate the time slot processing mode for the repeater; and obtain the time slot processing mode according to the second SIB 1; where in a condition that the time slot processing mode is the processing mode for the flexible time slot, the time slot processing mode for the repeater includes at least one of: no forwarding operation being performed at any of the flexible time slot;
forwarding operation being performed at each of the flexible time slot as per an uplink time slot;
forwarding operation being performed at each of the flexible time slot as per a downlink time slot; and
forwarding operation being performed at some of the flexible time slot as per an uplink time slot, and forwarding operation being performed at some of the flexible time slot as per a downlink time slot.

In some embodiments, the obtaining module is further configured to: receive a third SIB1 sent by the base station; where the third SIB1 is used to indicate that forwarding operation at a first time slot is performed as per the uplink time slot, and/or that forwarding operation at a second time slot is performed as per the downlink time slot, where the first time slot and the second time slot are any specified time slot in the flexible time slot.

In some embodiments, the configuration module is specifically configured to: determine an initial time slot for the repeater according to the time slot configuration information and the time slot processing mode for the repeater; and extend a flexible time slot in the initial time slot according to flexible time slot extension information, to obtain the time slot for the repeater.

In some embodiments, he configuration module is specifically configured to: receive second SCI or second MAC-CE sent by the base station, where the second SCI or the second MAC-CE carries the flexible time slot extension information; and extend the flexible time slot in the initial time slot according to the flexible time slot extension information, to obtain the time slot for the repeater; where the flexible time slot extension information includes at least one of: a total quantity of flexible time slots to be extended;
a first quantity of uplink time slots to be extended; and
a second quantity of downlink time slots to be extended.

In some embodiments, the obtaining module is further configured to: receive at least one of a fourth SIB1, third SCI, and third MAC-CE sent by the base station; and determine an effective duration of the time slot configuration information according to the at least one of the fourth SIB1, the third SCI, and the third MAC-CE.

In some embodiments, the obtaining module is further configured to: receive fourth SCI or fourth MAC-CE sent by the base station; and adjust the time slot for the repeater according to the fourth SCI or the fourth MAC-CE.

In some embodiments, the configuration module is further configured to: in a condition that the time slot configuration information corresponding to the fourth SCI or the fourth MAC-CE is inconsistent with the time slot configuration information corresponding to the first SIB1, determine the time slot configuration information corresponding to the fourth SCI or the fourth MAC-CE as target time slot configuration information; and configure the time slot for the repeater according to the target time slot configuration information and the processing mode for the flexible time slot.

In a fourth aspect, an embodiment of the present disclosure further provides a time slot configuration apparatus, which is applied to a base station. The time slot configuration apparatus includes: a sending module, configured to send at least one of a first SIB1, first MAC-CE or first SCI to a repeater, where the at least one of the first SIB1, the first MAC-CE or the first SCI carries time slot configuration information of the base station; where the at least one of the first SIB1, the first MAC-CE or the first SCI is used to instruct the repeater to configure a time slot for the repeater according to the time slot configuration information and a time slot processing mode, where the time slot processing mode includes at least one of: a processing mode for an uplink time slot, a processing mode for a downlink time slot and a processing mode for a flexible time slot.

In some embodiments, the sending module is specifically configured to: scramble Type0-PDCCH using an SI-RNTI; and send the first SIB 1 to the repeater through the scrambled Type0-PDCCH.

In some embodiments, the sending module is specifically configured to: send the first MAC-CE or the first SCI carrying a time slot table of the base station to the repeater, where the first MAC-CE or the first SCI is used to instruct the repeater to obtain the time slot configuration information of the base station; where the time slot table of the base station includes at least one of: an exclusive configuration table corresponding to the repeater, a general configuration table corresponding to the base station, or part or all of configuration rows of the general configuration table, and the time slot processing mode includes at least one of: no flexible time slot being configured in the time slot for the repeater, no forwarding operation being performed at any flexible time slot in the time slot for the repeater, and a target row in the time slot for the repeater being used for forwarding data.

In some embodiments, the sending module is further configured to: in a condition that a NACK sent by the repeater is received, resend the first MAC-CE or the first SCI to the repeater, where the NACK is used to indicate that the repeater has not received the first MAC-CE or the first SCI currently.

In some embodiments, the time slot configuration information includes at least one of: a period of a DL-UL pattern of the base station;
a quantity of consecutive full downlink symbols at a beginning of the DL-UL pattern;
a quantity of consecutive downlink symbols following a last full downlink time slot of the DL-UL pattern;
a quantity of consecutive full uplink symbols at an end of the DL-UL pattern; and
a quantity of consecutive uplink symbols in an end of a time slot preceding a first full uplink time slot of the DL-UL pattern.

In some embodiments, the processing mode for the flexible time slot for the repeater includes at least one of: no forwarding operation being performed at any of the flexible time slot; forwarding operation being performed at each of the flexible time slot as per an uplink time slot;
forwarding operation being performed at each of the flexible time slot as per a downlink time slot; and
forwarding operation being performed at some of the flexible time slot as per an uplink time slot, and forwarding operation being performed at some of the flexible time slot as per a downlink time slot.

In some embodiments, the sending module is further configured to: send a third SIB1 to the repeater, where the third SIB1 is used to indicate that forwarding operation at a first time slot is performed as per an uplink time slot, and/or that forwarding operation at a second time slot is performed as per the downlink time slot, where the first time slot and the second time slot are any specified time slot in the flexible time slot.

In some embodiments, the sending module is further configured to: send second SCI or second MAC-CE to the repeater, where the second SCI or the second MAC-CE carries flexible time slot extension information, and the extension information is used to instruct the repeater to extend the flexible time slot for the repeater; the extension information includes at least one of:
a total quantity of flexible time slots to be extended;
a first quantity of uplink time slots to be extended; and
a second quantity of downlink time slots to be extended.

In some embodiments, the sending module is further specifically configured to: send at least one of a fourth SIB1, third SCI, and third MAC-CE to the repeater, where the at least one of the fourth SIB1, the third SCI, and the third MAC-CE is used to indicate an effective duration of the time slot configuration information.

In some embodiments, the sending module is further specifically configured to: send fourth SCI or fourth MAC-CE to the repeater, where the fourth SCI or the fourth MAC-CE is used to instruct the repeater to adjust the time slot for the repeater.

In a fifth aspect, an embodiment of the present disclosure provides a repeater, including: a memory, configured to store a computer program;
a transceiver, configured to receive and send data under a control of a processor; and
the processor, configured to read the computer program in the memory and perform following operations: obtaining time slot configuration information of a base station and a time slot processing mode for the repeater; and configuring a time slot for the repeater according to the time slot configuration information and the time slot processing mode; where the time slot processing mode includes at least one of: a processing mode for an uplink time slot, a processing mode for a downlink time slot, or a processing mode for a flexible time slot.

In some embodiments, the obtaining the time slot configuration information of the base station includes: receiving a first system information block SIB1 sent by the base station; and obtaining the time slot configuration information according to the first SIB 1.

In some embodiments, the receiving the first SIB1 sent by the base station includes: in a condition that the repeater accesses the base station, descrambling Type0-PDCCH based on a preset system information-radio network temporary identifier SI-RNTI; determining physical downlink control channel PDCCH information according to the descrambled Type0-PDCCH, where the PDCCH information at least includes resource location information for a physical downlink shared channel PDSCH; and
receiving, through a PDCCH, the first SIB1 transmitted over the PDSCH.

In some embodiments, the obtaining the time slot configuration information of the base station includes: receiving first sidelink control information SCI or first medium access control-control element information MAC-CE sent by the base station; and obtaining the time slot configuration information according to the first SCI or the first MAC-CE.

In some embodiments, the receiving the first SCI or the first MAC-CE sent by the base station includes: receiving SCI or MAC-CE sent by the base station; blindly checking the SCI or the MAC-CE, and obtaining the first SCI from the blindly checked SCI, or obtaining the first MAC-CE from the blindly checked MAC-CE.

In some embodiments, the obtaining the time slot configuration information according to the first SCI or the first MAC-CE includes: obtaining a time slot table of the base station in the first SCI or the first MAC-CE; and obtaining the time slot configuration information and the time slot processing mode according to the time slot table of the base station; where the time slot table includes at least one of: an exclusive configuration table corresponding to the repeater, a general configuration table corresponding to the base station, or part or all of configuration rows of the general configuration table; the time slot processing mode includes at least one of: no flexible time slot being configured in the time slot for the repeater, no forwarding operation being performed at any flexible time slot in the time slot for the repeater, and a target row in the time slot for the repeater being used for forwarding data.

In some embodiments, the processor is further configured to: send an acknowledgement ACK to the base station in a condition that the first SCI or the first MAC-CE sent by the base station is received; or send a negative acknowledgement NACK to the base station in a condition that the first SCI or the first MAC-CE sent by the base station is not received, where the NACK is used to instruct the base station to resend the first SCI or the first MAC-CE.

In some embodiments, the time slot configuration information includes at least one of: a period of a downlink-uplink DL-UL pattern of the base station;
a quantity of consecutive full downlink symbols at a beginning of the DL-UL pattern;
a quantity of consecutive downlink symbols following a last full downlink time slot of the DL-UL pattern;
a quantity of consecutive full uplink symbols at an end of the DL-UL pattern; and
a quantity of consecutive uplink symbols in an end of a time slot preceding a first full uplink time slot of the DL-UL pattern.

In some embodiments, the obtaining the time slot processing mode for the repeater includes: receiving a second SIB1 sent by the base station, where the second SIB1 is used to indicate the time slot processing mode for the repeater; and obtaining the time slot processing mode according to the second SIB 1; where in a condition that the time slot processing mode is the processing mode for the flexible time slot, the time slot processing mode for the repeater includes at least one of: no forwarding operation being performed at any of the flexible time slot;
forwarding operation being performed at each of the flexible time slot as per an uplink time slot;
forwarding operation being performed at each of the flexible time slot as per a downlink time slot; and
forwarding operation being performed at some of the flexible time slot as per an uplink time slot, and forwarding operation being performed at some of the flexible time slot as per a downlink time slot.

In some embodiments, the processor is further configured to: receive a third SIB1 sent by the base station; where the third SIB1 is used to indicate that forwarding operation at a first time slot is performed as per the uplink time slot, and/or that forwarding operation at a second time slot is performed as per the downlink time slot, where the first time slot and the second time slot are any specified time slot in the flexible time slot.

In some embodiments, the configuring the time slot for the repeater according to the time slot configuration information and the time slot processing mode for the repeater includes: determining an initial time slot for the repeater according to the time slot configuration information and the time slot processing mode for the repeater; and extending a flexible time slot in the initial time slot according to flexible time slot extension information, to obtain the time slot for the repeater.

In some embodiments, the extending the flexible time slot in the initial time slot according to the flexible time slot extension information, to obtain the time slot for the repeater includes: receiving second SCI or second MAC-CE sent by the base station, where the second SCI or the second MAC-CE carries the flexible time slot extension information; and extending the flexible time slot in the initial time slot according to the flexible time slot extension information, to obtain the time slot for the repeater; where the flexible time slot extension information includes at least one of:
a total quantity of flexible time slots to be extended;
a first quantity of uplink time slots to be extended; and
a second quantity of downlink time slots to be extended.

In some embodiments, the processor is further configured to: receive at least one of a fourth SIB1, third SCI, and third MAC-CE sent by the base station; and determine an effective duration of the time slot configuration information according to the at least one of the fourth SIB1, the third SCI, and the third MAC-CE.

In some embodiments, the processor is further configured to: receive fourth SCI or fourth MAC-CE sent by the base station; and adjust the time slot for the repeater according to the fourth SCI or the fourth MAC-CE.

In some embodiments, the adjusting the time slot for the repeater according to the fourth SCI or the fourth MAC-CE includes: in a condition that the time slot configuration information corresponding to the fourth SCI or the fourth MAC-CE is inconsistent with the time slot configuration information corresponding to the first SIB1, determining the time slot configuration information corresponding to the fourth SCI or the fourth MAC-CE as target time slot configuration information; and configuring the time slot for the repeater according to the target time slot configuration information and the processing mode for the flexible time slot.

In a sixth aspect, an embodiment of the present disclosure provides a base station, including: a memory, configured to store a computer program;
a transceiver, configured to receive and send data under a control of a processor;
the processor, configured to read the computer program in the memory and perform following operations: sending at least one of a first SIB1, first MAC-CE or first SCI to a repeater, where the at least one of the first SIB1, the first MAC-CE or the first SCI carries time slot configuration information of the base station; where the at least one of the first SIB1, the first MAC-CE or the first SCI is used to instruct the repeater to configure a time slot for the repeater according to the time slot configuration information and a time slot processing mode, where the time slot processing mode includes at least one of: a processing mode for an uplink time slot, a processing mode for a downlink time slot and a processing mode for a flexible time slot.

In some embodiments, the sending the first SIB1 to the repeater includes: scrambling Type0-PDCCH using an SI-RNTI; and sending the first SIB1 to the repeater through the scrambled Type0-PDCCH.

In some embodiments, the sending the first MAC-CE or the first SCI to the repeater includes: sending the first MAC-CE or the first SCI carrying a time slot table of the base station to the repeater, where the first MAC-CE or the first SCI is used to instruct the repeater to obtain the time slot configuration information of the base station; where the time slot table of the base station includes at least one of: an exclusive configuration table corresponding to the repeater, a general configuration table corresponding to the base station, or part or all of configuration rows of the general configuration table, and the time slot processing mode includes at least one of: no flexible time slot being configured in the time slot for the repeater, no forwarding operation being performed at any flexible time slot in the time slot for the repeater, and a target row in the time slot for the repeater being used for forwarding data.

In some embodiments, the processor is further configured to: in a condition that a NACK sent by the repeater is received, resend the first MAC-CE or the first SCI to the repeater, where the NACK is used to indicate that the repeater has not received the first MAC-CE or the first SCI currently.

In some embodiments, the time slot configuration information includes at least one of: a period of a DL-UL pattern of the base station;
a quantity of consecutive full downlink symbols at a beginning of the DL-UL pattern;
a quantity of consecutive downlink symbols following a last full downlink time slot of the DL-UL pattern;
a quantity of consecutive full uplink symbols at an end of the DL-UL pattern; and
a quantity of consecutive uplink symbols in an end of a time slot preceding a first full uplink time slot of the DL-UL pattern.

In some embodiments, in a condition that the time slot processing mode is the processing mode for the flexible time slot, the processing mode for the flexible time slot for the repeater includes at least one of: no forwarding operation being performed at any of the flexible time slot;
forwarding operation being performed at each of the flexible time slot as per an uplink time slot;
forwarding operation being performed at each of the flexible time slot as per a downlink time slot; and
forwarding operation being performed at some of the flexible time slot as per an uplink time slot, and forwarding operation being performed at some of the flexible time slot as per a downlink time slot.

In some embodiments, the processor is further configured to: send a third SIB1 to the repeater, where the third SIB1 is used to indicate that forwarding operation at a first time slot is performed as per an uplink time slot, and/or that forwarding operation at a second time slot is performed as per the downlink time slot, where the first time slot and the second time slot are any specified time slot in the flexible time slot.

In some embodiments, the processor is further configured to: send second SCI or second MAC-CE to the repeater, where the second SCI or the second MAC-CE carries flexible time slot extension information, and the extension information is used to instruct the repeater to extend the flexible time slot for the repeater; the extension information includes at least one of:
a total quantity of flexible time slots to be extended;
a first quantity of uplink time slots to be extended; and
a second quantity of downlink time slots to be extended.

In some embodiments, the processor is further configured to: send at least one of a fourth SIB1, third SCI, and third MAC-CE to the repeater, where the at least one of the fourth SIB1, the third SCI, and the third MAC-CE is used to indicate an effective duration of the time slot configuration information.

In some embodiments, the processor is further configured to: send fourth SCI or fourth MAC-CE to the repeater, where the fourth SCI or the fourth MAC-CE is used to instruct the repeater to adjust the time slot for the repeater.

In the time slot configuration method, the apparatus, the repeater, the base station and the storage medium provided in the embodiments of the present disclosure, the time slot configuration information of the base station and the time slot processing mode for the repeater are obtained; and the time slot for the repeater is configured according to the time slot configuration information and the time slot processing mode. Through this solution, uplink and downlink time slots can be configured for a repeater while avoiding the repeater from frequently reading scheduling information. In addition, a situation where a terminal or the base station cannot effectively send or receive data due to wrong time slot configuration for the repeater can be prevented, thereby ensuring normal communication.

### BRIEF DESCRIPTION OF DRAWINGS

FIG. 1 is an example diagram of an application scenario provided by an embodiment of the present disclosure.
FIG. 2 (a) is a flow diagram of a time slot configuration method provided by an embodiment of the present disclosure.
FIG. 2 (b) is an example diagram of time slot configuration information of a base station provided by an embodiment of the present disclosure.
FIG. 3 is a signaling interaction diagram 1 of a time slot configuration method provided by an embodiment of the present disclosure.
FIG. 4 (a) is a signaling interaction diagram 2 of a time slot configuration method provided by an embodiment of the present disclosure.
FIG. 4 (b) is a principle diagram of a flexible time slot extension process provided by an embodiment of the present disclosure.
FIG. 5 is a signaling interaction diagram 3 of a time slot configuration method provided by an embodiment of the present disclosure.
FIG. 6 is a signaling interaction diagram 4 of a time slot configuration method provided by an embodiment of the present disclosure.
FIG. 7 is a structural diagram 1 of a time slot configuration apparatus provided by an embodiment of the present disclosure.
FIG. 8 is a structural diagram 2 of a time slot configuration apparatus provided by an embodiment of the present disclosure.
FIG. 9 is a structural diagram of a repeater provided by an embodiment of the present disclosure.
FIG. 10 is a structural diagram of a base station provided by an embodiment of the present disclosure.

### DESCRIPTION OF EMBODIMENTS

The term "and/or" in this disclosure describes the association relationship of associated objects, indicating that there may be three types of relationship. For example, A and/or B can represent: A exists alone, A and B exist at the same time, and B exists alone. The character "/" generally indicates that the associated objects are in an "or" relationship. In embodiments of this disclosure, the term "multiple" refers to two or more, and other quantifiers are similar to this.

The technical solutions of embodiments of this disclosure will be clearly and comprehensively described below in conjunction with the drawings in the embodiments of this disclosure. Obviously, the described embodiments are only part of the embodiments of this disclosure, not all of them. All other embodiments obtained based on the embodiments in this disclosure by those of ordinary skill in the art without creative work are within the protection scope of this disclosure.

First, some of the terms involved in embodiments of the present disclosure are explained:
System Information Block (System Information Block, SIB);
Downlink Control Information (Downlink Control Information, DCI);
Medium Access Control-Control Element (MAC Control Element, MAC-CE);
Physical Downlink Control Channel (Physical Downlink Control Channel, PDCCH);
Physical Downlink Shared Channel (Physical Downlink Share Channel, PDSCH);
Remaining Minimum System Information (Remaining Minimum System Information, RMSI);
Radio Network Temporary Identifier (Radio Network Temporary Identifier, RNTI);
Acknowledge (Acknowledge, ACK);
Negative Acknowledge (Negative Acknowledge, NACK);
Radio Resource Control (Radio Resource Control, RRC);
Side Control Information (Side Control Information, SCI);
System Information Radio Network Temporary Identifier (System Information, SI).

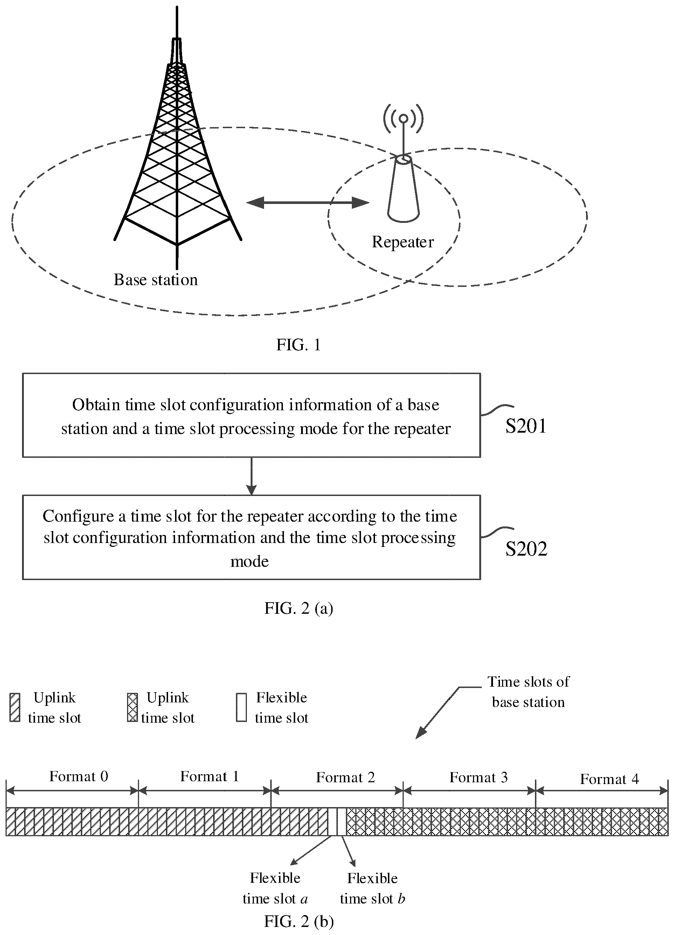

Next, an application scenario of embodiments of the present disclosure is explained in conjunction with FIG. 1:
FIG. 1 is an example diagram of an application scenario provided by an embodiment of the present disclosure. As shown in FIG. 1, the scenario includes: a base station and a repeater.

In some embodiments, the base station may be a base station and/or a base station controller in Global System of Mobile communication (GlobalSystemofMobilecommunication, GSM) or Code Division Multiple Access (CodeDivisionMultipleAccess, CDMA), or a base station (NodeB, NB) and/or a radio network controller (RadioNetworkController, RNC) in Wideband Code Division Multiple Access (WidebandCodeDivisionMultipleAccess, WCDMA), or an evolved base station (Evolutional NodeB, 4G base station or eNodeB) in Long Term Evolution (LongTermEvolution, LTE), or a relay station or access point, or a base station (5G base station) in a future 5G network, etc., which is not limited in the embodiments of the present disclosure.

A repeater is a wireless signal relay product that can effectively supplement the coverage capability of a base station in network deployment, and can be used as one of the necessary means to achieve the goal of "small capacity, large coverage". The advantages of using repeaters for network deployment are: first, network coverage can be guaranteed without increasing the quantity of base stations; second, the cost of the repeater is much lower than that of the micro-cellular system with the same effect. Compared with base stations, repeaters have the advantages of simple structure, less investment and convenient installation. They can be widely used in dead zones and weak areas that are difficult to cover, such as shopping malls, hotels, airports, docks, stations, gymnasiums, entertainment halls, subways, tunnels, highways, islands and other places to improve communication quality and solve problems such as dropped calls. Therefore, repeaters are a preferred solution for extending the current communication network's coverage capability.

In the related art, a control plane protocol stack can be added on the basis of the original repeater, so that the base station can control the relevant functions of the repeater by sending network control information. In R18, the current standard agrees to support the characteristics of network-controlled repeaters. When a repeater serves a base station, uplink and downlink time slot (symbol) information needs to be configured for the repeater.

However, the inventors found that the current uplink and downlink time slot configuration approach is mainly for the terminal. For example, the uplink and downlink time slots for the terminal are configured by means of the SIB 1 notification approach and the DCI message indication approach. However, due to the existence of flexible time slots, if the above two approaches are adopted, the repeater needs to frequently read scheduling information. If a DCI message is lost, uplink and downlink configuration errors of time slots are caused, and thus the terminal or the base station cannot effectively send or receive data through the repeater. Therefore, such an approach basically cannot be implemented.

In addition, in the above two uplink and downlink time slot configuration approaches, the uplink and downlink time slots of the repeater and the base station must be consistent. Due to the existence of flexible time slots, if the uplink and downlink switching time for the repeater is insufficient, transmission errors may occur. In addition, when the repeater causes interference to an adjacent base station, the base station cannot control the interference of the repeater to the adjacent base station by adjusting the configuration of the uplink and downlink time slots.

In summary, there is currently no solution to the problem in the uplink and downlink time slot configuration for the repeater.

In view of this, embodiments of the present disclosure provide a time slot configuration method, an apparatus, a repeater, a base station and a storage medium. During configuring uplink and downlink time slots for a repeater, a time slot processing mode for the repeater is configured synchronously, so that the uplink and downlink time slots for the repeater can be configured while avoiding the repeater from frequently reading scheduling information. In addition, a situation where a terminal or a base station cannot effectively send or receive data due to wrong time slot configuration for the repeater can further be prevented, thereby ensuring normal communication.

It should be noted that FIG. 1 shows a communication scenario of a base station and a repeater as an example. Optionally, the scenario may further include other devices, such as other base stations, repeaters, core network devices, and user equipment, etc., which are not limited in the embodiments of the present disclosure.

It should be understood that the technical solution provided in the embodiments of the present disclosure can be applied to a variety of systems, especially 5G systems. For example, applicable systems may include global system of mobile communication (global system of mobile communication, GSM) system, code division multiple access (code division multiple access, CDMA) system, wideband code division multiple access (Wideband Code Division Multiple Access, WCDMA) general packet radio service (general packet radio service, GPRS) system, long term evolution (long term evolution, LTE) system, LTE frequency division duplex (frequency division duplex, FDD) system, LTE time division duplex (time division duplex, TDD) system, long term evolution advanced (long term evolution advanced, LTE-A) system, universal mobile telecommunication system (universal mobile telecommunication system, UMTS), worldwide interoperability for microwave access (worldwide interoperability for microwave access, WiMAX) system, 5G New Radio (New Radio, NR) system, etc. Each of these systems includes a terminal and network device. The system further includes core network parts, such as Evolved Packet System (Evolved Packet System, EPS), 5G system (5GS), etc.

It should be understood that the method and the apparatus provided in the embodiments of the present disclosure are based on the same application concept. Since the principles of the method and the apparatus solving the problem are similar, reference for the implementation of the method and the apparatus can be made to each other, and repeated details will be omitted.

The technical solution of the embodiments of the present disclosure and how the technical solution of the present disclosure solves the above technical problem are described in detail with specific embodiments. The following specific embodiments can be combined with each other, and the same or similar concepts or processes may not be repeated in some embodiments.

FIG. 2 (a) is a flow chart of a time slot configuration method provided in an embodiment of the present disclosure. It should be understood that the time slot configuration method of this embodiment is applied to a repeater. As shown in FIG. 2 (a), the time slot configuration method includes the following steps.

S201, obtain time slot configuration information of a base station and a time slot processing mode for the repeater.

The base station is a host base station for the repeater, and the way of establishing a connection between the repeater and the base station is not described here.

In an embodiment of the present disclosure, the time slot configuration information of the base station includes: a time division duplexing (TDD) time slot allocation of the base station.

The TDD time slot allocation of the base station includes uplink time slots (symbols), downlink time slots (symbols) and flexible time slots. In a data forwarding process, the flexible time slots can be used as any one of empty symbols, uplink time slots (symbols) or downlink time slots (symbols) according to needs.

In some embodiments, the time slot processing mode includes at least one of: a processing mode for an uplink time slot, a processing mode for a downlink time slot, or a processing mode for a flexible time slot.

The processing mode for the flexible time slot is used to indicate the data forwarding mode of the repeater at the flexible time slot. Specifically, the processing mode for the flexible time slot includes at least one of:
(1) the repeater treats the flexible time slot as an empty symbol and does not forward data at the empty symbol;
(2) the repeater treats all flexible time slots as uplink time slots (symbols) and forwards uplink data at the flexible time slots;
(3) the repeater treats all flexible time slots as downlink time slots (symbols) and forwards downlink data at the flexible time slots; and
(4) the repeater treats part of the flexible time slots as uplink time slots (symbols) and forwards uplink data at this part of the flexible time slots, treats part of the flexible time slots as downlink time slots (symbols) and forwards downlink data at this part of the flexible time slots, and treats part of the flexible time slots as empty symbols and does not forward data at this part of the flexible time slots.

The specific scheme for the repeater to obtain the processing mode for the flexible time slot is not particularly limited in the embodiments of the present disclosure. For example, the processing mode for the flexible time slot can be sent by the base station to the repeater, or be configured for the repeater through the protocol.

S202, configure a time slot for the repeater according to the time slot configuration information and the time slot processing mode.

Specifically, the time slot configuration information of the base station can be used as an initial time slot for the repeater, and then the corresponding time slot in the initial time slot is configured according to the time slot processing mode.

For example, taking the time slot processing mode being the processing mode for the flexible time slot as an example, FIG. 2 (b) is an example diagram of time slot configuration information of a base station provided by an embodiment of the present disclosure. It should be noted that FIG. 2 (b) is shown as an example with Format 0 and Format 1 being full downlink symbols, Format 2 being uplink/downlink symbols, and Format 3 and Format 4 being uplink symbols, but the time slot configuration information is not limited to this in actual applications.

As shown in FIG. 2 (b), Format 2 includes flexible time slot *a* and flexible time slot *b.* In an embodiment of the present disclosure, the time slot configuration information is first used as an initial time slot for the repeater. Then, according to the processing mode for the flexible time slot, the processing mode for the flexible time slot *a* and the flexible time slot *b* in the initial time slot is determined, thereby realizing the time slot configuration for the repeater.

For example, if the processing mode for the flexible time slot is to use the flexible time slot as an empty symbol, the flexible time slot *a* and the flexible time slot *b* are configured as empty symbols, and the repeater does not forward data at the empty symbols;
or when the processing mode for the flexible time slot is to use the flexible time slot as an uplink time slot, the flexible time slot *a* and the flexible time slot *b* are configured as uplink time slots, and the repeater only forwards uplink data at the uplink time slots;
or when the processing mode for the flexible time slot is to use the flexible time slot as a downlink time slot, the flexible time slot *a* and the flexible time slot *b* are configured as downlink time slots, and the repeater only forwards downlink data at the downlink time slots;
or when the processing mode for the flexible time slot is to use some of the flexible time slot as uplink time slots and some of the flexible time slot as downlink time slots, the flexible time slot *a* may be configured as an uplink time slot, and the flexible time slot *b* may be configured as a downlink time slot. Similar implementation may be applied to other configuration modes, and repeated details will not be described here one by one.

In some optional implementations, after the time slot configuration for the repeater is completed, the repeater can forward data according to the time slots.

Optionally, during a data forwarding process, there are further different data forwarding modes for the uplink time slot or the downlink time slot in the time slot for the repeater. For example, for the uplink time slot for the repeater, at least one of the following is included:
(1) all uplink time slots are regarded as empty symbols where data is not forwarded;
(2) part of the uplink time slots is regarded as empty symbols, and data is not forwarded at this part of empty symbols;
(3) data is forwarded normally at each uplink time slot.

Similarly, for the downlink time slot for the repeater, at least one of the following is included:
(1) all downlink time slots are regarded as empty symbols where data is not forwarded;
(2) part of the downlink time slots is regarded as empty symbols and data is not forwarded at this part of empty symbols;
(3) data is forwarded normally at each downlink time slot.

In the embodiments of the present disclosure, during configuring uplink and downlink time slots for the repeater, the time slot processing mode is configured synchronously, so that the uplink and downlink time slots for the repeater can be configured while avoiding the repeater from frequently reading scheduling information. At the same time, a situation where a terminal or a base station cannot effectively send or receive data due to wrong time slot configuration for the repeater can be prevented, thereby ensuring normal communication.

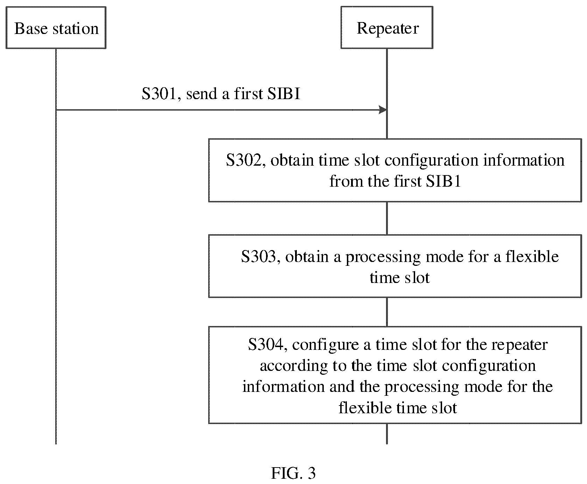

It should be noted that there are many ways to obtain the time slot configuration information of the base station. Next, description is given in detail in combination with FIGS. 3 to 7.

FIG. 3 is a signaling interaction diagram of a time slot configuration method provided in an embodiment of the present disclosure. As shown in FIG. 3, the time slot configuration method includes the following steps.

S301, a base station sends a first SIB1 to a repeater.

The first SIB1 carries time slot configuration information. The first SIB1 may be an exclusive SIB1 to the repeater, that is, the first SIB1 is used for the base station to send the time slot configuration information to the same repeater; or the first SIB1 may further be a common SIB1 corresponding to the base station, that is, the base station may send the time slot configuration information to multiple repeaters through the first SIB1.

In the specific implementation of step S301, in a first implementation, the base station may send the first SIB1 to the repeater through the PDCCH between the base station and the repeater.

In another implementation, the base station may further scramble the PDCCH. Specifically, in the above step S301, the following steps are included.
(1) The base station scrambles Type0-PDCCH using a preset SI-RNTI.

It should be noted that each repeater may correspond to at least one preset SI-RNTI. The content of the preset SI-RNTI is not particularly limited in the embodiments of the present disclosure. For example, the SI-RNTI may be "0xfff3" or the like.

It should be noted that the preset SI-RNTI can be an exclusive scrambling identifier to the repeater, or a scrambling identifier corresponding to a certain group of repeaters. For example, multiple repeaters can be grouped, and the same preset SI-RNTI is used for the repeaters in the same group, thereby simplifying the scrambling process and improving efficiency.

(2) The base station sends the first SIB1 to the repeater through the scrambled Type0-PDCCH.

Specifically, the SIB1 can carry information on whether the base station can access the repeater device, and the corresponding Type0-PDCCH is scrambled with the SR-SI-RNTI.

Correspondingly, in a condition that the repeater the repeater accesses the base station, the repeater descrambles the Type0-PDCCH based on the SI-RNTI, and determine the physical downlink control channel PDCCH information based on the descrambled Type0-PDCCH, where the PDCCH information includes at least resource location information for a physical downlink shared channel PDSCH.

(3) The repeater receives, through a PDCCH, the first SIB1 transmitted over the PDSCH.

In the embodiments of the present disclosure, the first SIB1 is scrambled by the preset SR-SI-RNTI to avoid interference to other base stations or repeaters.

S302, obtain time slot configuration information from the first SIB 1

In some optional implementations, the time slot configuration information includes but is not limited to at least one or more of the following:
(1) a period of a downlink-uplink DL-UL pattern of the base station;
(2) a quantity of consecutive full downlink symbols at a beginning of the DL-UL pattern;
(3) a quantity of consecutive downlink symbols following a last full downlink time slot of the DL-UL pattern;
(4) a quantity of consecutive full uplink symbols at an end of the DL-UL pattern; and
(5) a quantity of consecutive uplink symbols in an end of a time slot preceding a first full uplink time slot of the DL-UL pattern.

S303, obtain a processing mode for a flexible time slot.

In an embodiment of the present disclosure, the processing mode for the flexible time slot can be obtained in a variety of ways. For example, in a first aspect, the processing mode for the flexible time slot can be sent by the base station to the repeater, specifically, including the following steps.
(1) The base station sends a second SIB1 to the repeater, where the second SIB1 carries the processing mode for the flexible time slot.

It should be noted that the second SIB1 and the first SIB1 may be the same information, that is, the base station can send the processing mode for the flexible time slot while sending the time slot configuration information of the base station to the repeater; or the second SIB1 and the first SIB1 may further be different information.

It should be understood that in a condition that the second SIB1 and the first SIB1 are different information, the embodiments of the present disclosure do not specifically limit the execution order of step S303. For example, step S303 can be executed before step S301 and/or step S302.

(2) The repeater receives the second SIB1 sent by the base station, where the second SIB1 is used to indicate the processing mode for the flexible time slot for the repeater.

(3) The processing mode for the flexible time slot is obtained according to the second SIB1.

In the embodiments, the base station sends the processing mode for the flexible time slot to the repeater, and the base station can adjust the processing mode for the flexible time slot in real time according to the demand, having the time slot configuration result of the repeater more in line with the current data transmission demand.

In a second aspect, the processing mode for the flexible time slot for the repeater can further be pre-set through the protocol according to the repeater. In this way, compared with the solution of sending the processing mode for the flexible time slot by the base station in the above embodiments, the processing mode for the flexible time slot is obtained through the protocol without the intervention of the base station, which can reduce the signaling interaction between the base station and the repeater, reduce the implementation complexity of the present disclosure, and thus improve the time slot configuration efficiency of the repeater.

In some embodiments, when the processing mode for the flexible time slot is "forwarding operation being performed at some of the flexible time slot as per an uplink time slot, and forwarding operation being performed at some of the flexible time slot as per a downlink time slot", the repeater needs to be further informed of the specific configuration approach of each flexible time slot.

Optionally, on the one hand, in a condition that the processing mode for the flexible time slot is sent from the base station to the repeater, the base station may send a third SIB1 to the repeater, where the third SIB1 is used to indicate that forwarding operation at a first time slot is performed as per an uplink time slot, and/or that forwarding operation at a second time slot is performed as per the downlink time slot, where the first time slot and the second time slot are any specified time slot in the flexible time slot.

On the other hand, in a condition that the processing mode for the flexible time slot is obtained through the protocol, the following content may further be indicated through the protocol: forwarding operation at a first time slot is performed as per an uplink time slot, and/or that forwarding operation at a second time slot is performed as per the downlink time slot, where the first time slot and the second time slot are any specified time slot in the flexible time slot.

For example, still taking FIG. 2 (b) as an example, the third SIB1 or protocol may be used to indicate: the flexible time slot *a* (or flexible time slot *b*) is configured as an uplink time slot, and the flexible time slot *b* (or flexible time slot *a*) is configured as a downlink time slot.

It should be noted that the third SIB1, the second SIB1 and the first SIB1 may be the same information, or the third information, the second SIB1 and the first SIB1 may be different information.

For example, if the third SIB1 and the first SIB1 are the same information, the base station may send the processing mode for the flexible time slot while sending the time slot configuration information of the base station to the repeater.

S304, configure a time slot for the repeater according to the time slot configuration information and the processing mode for the flexible time slot.

It should be noted that the implementation of step S304 is similar to that of step S202 in the embodiment shown in FIG. 2 (a), and reference for the details can be made to the above embodiments, which will not be repeated here.

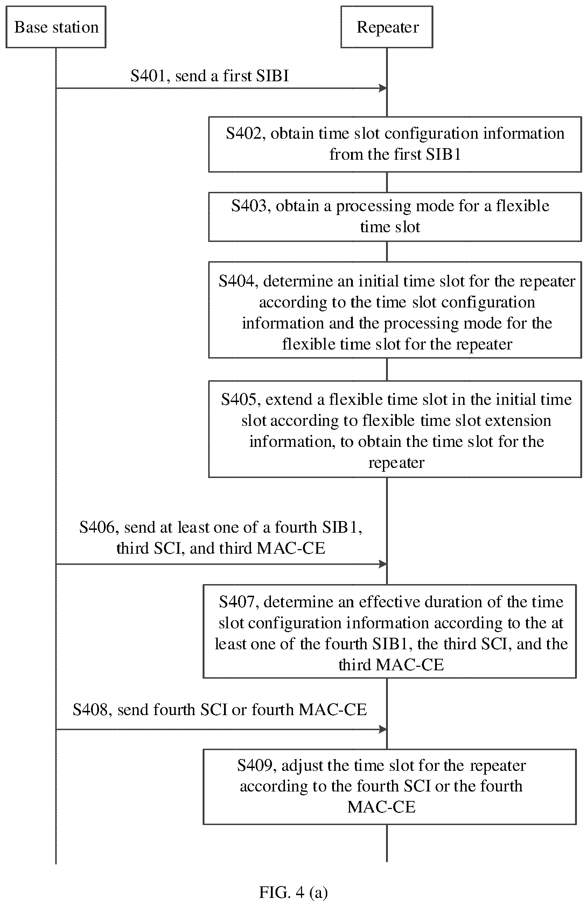

FIG. 4 (a) is a signaling interaction diagram 2 of a time slot configuration method provided in an embodiment of the present disclosure. As shown in FIG. 4 (a), the time slot configuration method includes the following steps.

S401, a base station sends the first SIB1 to a repeater.

S402, the repeater obtains time slot configuration information from the first SIB1.

S403, the repeater obtains a processing mode for a flexible time slot.

S404, the repeater determines an initial time slot for the repeater according to the time slot configuration information and the processing mode for the flexible time slot for the repeater.

It should be noted that the implementations and beneficial effects of steps S401 to S403 are similar to those of steps S301 to S303 in the embodiments shown in FIG. 3. Please refer to the above embodiments for details which will not be repeated here.

As for the way of determining the initial time slot in S404, it is similar to the scheme of determining the time slot for the repeater in step S202 in the embodiment shown in FIG. 2 (a). Please refer to the above embodiments for details which will not be repeated here.

S405, the repeater extends a flexible time slot in the initial time slot according to flexible time slot extension information, to obtain the time slot for the repeater.

The extension information is used to indicate the increase of the quantity of flexible time slots in the time slot for the repeater. The extension information includes but is not limited to at least one or more of: a position for extending the flexible time slot, a quantity for extending the flexible time slot, etc.

In a first implementation, the extension information may be obtained according to the protocol. In this process, no intervention of other devices (such as base stations) is required, which can reduce the signaling interaction between these devices and the repeater, reduce the implementation complexity of the present disclosure, and thus improve the time slot configuration efficiency of the repeater.

In a second implementation, the base station can further send the extension information to the repeater, specifically, including the following steps:
(1) the base station sends a radio resource control signaling (Radio Resource Control, RRC), second SCI or second MAC-CE to the repeater, where the RRC signaling, the second SCI or the second MAC-CE carries the flexible time slot extension information;
(2) the repeater receives the RRC signaling, the second SCI or the second MAC-CE sent by the base station, and obtains the flexible time slot extension information therefrom; and
(3) the repeater extends the flexible time slot in the initial time slot according to the flexible time slot extension information, to obtain the time slot for the repeater.

For example, taking the flexible time slot extension information being the quantity for extending the flexible time slot as an example, the flexible time slot extension information includes at least one of the following.

(1) a total quantity of flexible time slots to be extended.

Specifically, when the extension information is the total quantity of flexible time slots to be extended, taking the total quantity being N as an example, the repeater can treat the last M downlink symbols in a time slot following the last full downlink time slot in the initial time slot as empty symbols, and no data forwarding is performed in the empty symbols; at the same time, the repeater can treat the first (N-M) uplink symbols in a time slot preceding the first full uplink time slot in the initial time slot as empty symbols, and no data forwarding is performed in the empty symbols.

It should be noted that the embodiments of the present disclosure do not specifically limit a value of M. For example, the value of M can be determined according to a ratio of N to a preset value. For example, M can be any value such as N/2, N/3, etc. In some scenarios, the preset value can be set in real time according to the data transmission requirements to meet the communication requirements of different scenarios.

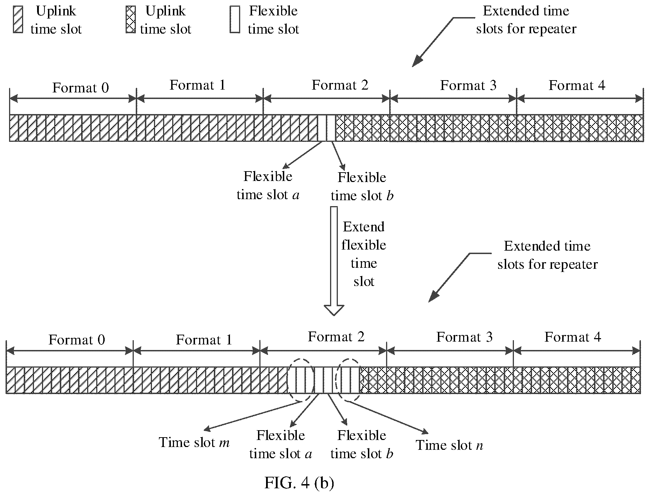

For example, taking the total quantity N of flexible time slots to be extended being 6 as an example, FIG. 4 (b) is a schematic principle diagram of a flexible time slot extension process provided by an embodiment of the present disclosure. It should be understood that in FIG. 4 (b), the initial time slot for the repeater is shown as an example with Format 0 and Format 1 being full downlink symbols, Format 2 being uplink/downlink symbols, and Format 3 and Format 4 being uplink symbols, but the initial time slot is not limited to this in actual application.

As shown in FIG. 4 (b), when the total quantity N of flexible time slots to be extended is 6 and M is N/2, the last 3 downlink symbols in a time slot following the last full downlink time slot "Format 1" are "time slot m"; the first 3 uplink symbols in a time slot preceding the first full uplink time slot "Format 3" in the initial time slot are "time slot *n",* that is, in this step, "time slot *m"* and "time slot *n"* can be extended as empty symbols.

(2) a first quantity of uplink time slots to be extended.

For example, taking the first quantity of uplink time slots to be extended being S₁ as an example, the repeater can treat the first S₁ uplink symbols in the time slot preceding the first full uplink time slot in the initial time slot as empty symbols where no forwarding operation is performed. Still taking FIG. 4 (b) as an example, the first S₁ uplink symbols in the time slot following the first full uplink time slot "Format 3" can be extended as empty symbols.

(3) a second quantity of downlink time slots to be extended.

For example, taking the first quantity of uplink time slots to be extended being S₂ as an example, the repeater can extend the last S₂ downlink symbols in the time slot following the last full downlink time slot in the initial time slot as empty symbols. Still taking FIG. 4 (b) as an example, the last S₂ downlink symbols in the time slot following the last full downlink time slot "Format 1" can be extended as empty symbols.

It should be noted that values of S₁ and S₂ are not limited in the embodiments of the present disclosure.

In the embodiments, the base station sends the extension information to the repeater, and the base station can adjust the extension information in real time according to the demand, having the time slot configuration result of the repeater more in line with the current data transmission demand.

S406, the base station sends at least one of a fourth SIB1, third SCI, and third MAC-CE to the repeater.

The at least one of the fourth SIB1, the third SCI, and the third MAC-CE is used to indicate an effective duration of the time slot configuration information.

S407, the repeater determines an effective duration of the time slot configuration information according to the at least one of the fourth SIB1, the third SCI, and the third MAC-CE.

Specifically, the time slot configured by the repeater becomes invalid after the effective duration from the time when the configuration is completed. For example, taking the effective duration corresponding to a time slot being 200 milliseconds as an example, when the repeater completes the configuration of the time slot, the time slot becomes invalid after 200 milliseconds.

It should be noted that steps S406 to S407 in the embodiments of the present disclosure are optional steps, that is, the effective duration may not be configured. Without configuring the effective duration, the repeater can always use the currently configured time slot to forward data until the time slot configuration is updated.

S408, the base station sends fourth SCI or fourth MAC-CE to the repeater.

The fourth SCI or the fourth MAC-CE is used to instruct the repeater to adjust the time slot for the repeater, and the fourth SCI or the fourth MAC-CE carries the current time slot configuration information of the base station.

S409, the repeater adjusts the time slot for the repeater according to the fourth SCI or the fourth MAC-CE.

In one scenario, the base station may periodically send the fourth SCI or the fourth MAC-CE to the repeater according to a preset period. Accordingly, when the repeater receives the fourth SCI or the fourth MAC-CE, the repeater adjusts the time slot for the repeater according to the current time slot configuration information of the base station carried in the fourth SCI or the fourth MAC-CE. Optionally, when the time slot configuration information does not change compared with the previous time slot configuration information, the repeater does not adjust the current time slot.

In another scenario, the base station may further send the fourth SCI or the fourth MAC-CE to the repeater when its time slot configuration information changes, and the fourth SCI or the fourth MAC-CE carries the changed time slot configuration information, so that the repeater adjusts the time slot in time.

In some optional implementations, in a condition that the time slot configuration information corresponding to the fourth SCI or the fourth MAC-CE is inconsistent with the time slot configuration information corresponding to the first SIB1, the time slot configuration information corresponding to the fourth SCI or the fourth MAC-CE is determined as target time slot configuration information.

Further, the time slot for the repeater is configured according to the target time slot configuration information and the processing mode for the flexible time slot.

It should be understood that the specific implementation of configuring the time slot for the repeater according to the target time slot configuration information and the processing mode for the flexible time slot is similar to the scheme in the aforementioned embodiments, and will not be repeated here.

In the embodiments of the present disclosure, the time slot configured by the repeater can be adjusted in real time to meet the communication needs of various scenarios.

It should be noted that any one or more of the fourth SIB1, the third SIB1, the second SIB1, and the first SIB1 mentioned above can be the same information or different information; similarly, any one or more of the third SCI, the second SCI, and the first SCI can be the same information or different information; any one or more of the third MAC-CE, the second MAC-CE, and the first MAC-CE can be the same information or different information, which is not limited in the embodiments of the present disclosure.

In addition, the above steps S408 to S409 are optional steps. For example, when the time slot configuration information of the base station has not changed, the time slot for the repeater may not be adjusted.

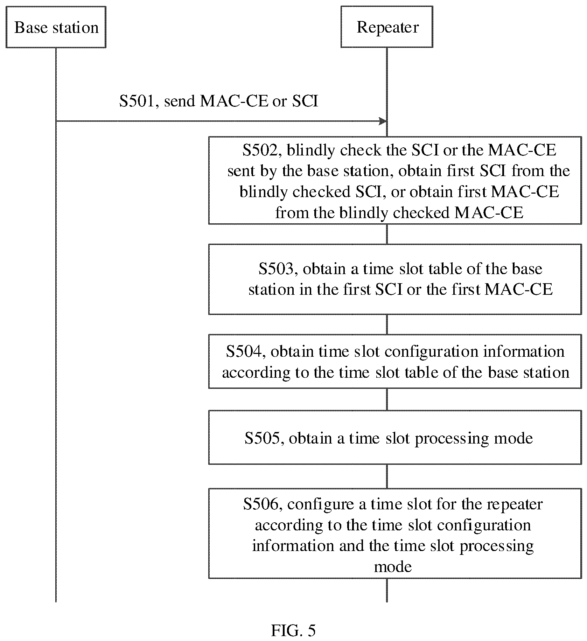

FIG. 5 is a signaling interaction diagram 3 of a time slot configuration method provided in an embodiment of the present disclosure. As shown in FIG. 5, the time slot configuration method includes the following steps.

S501, a base station sends MAC-CE or SCI to a repeater.

S502, the repeater blindly checks the SCI or the MAC-CE sent by the base station, obtains first SCI from the blindly checked SCI, or obtains first MAC-CE from the blindly checked MAC-CE.

S503, the repeater obtains a time slot table of the base station in the first SCI or the first MAC-CE.

The time slot table of the base station carries time slot configuration information of the base station.

Specifically, the base station indicates a time slot configuration for the repeater residing in the base station by sending the SCI or the MAC-CE, and scrambling is performed using different RNTIs for different repeaters.

Optionally, the repeaters can further be grouped, and the control information for a group of repeaters can be scrambled using group-RNTI, where the same configuration applies to the repeaters in the same group.

Correspondingly, the repeater uses its corresponding RNTI or group-RNTI to blindly check the SCI/MAC-CE. When the corresponding SCI or MAC-CE is detected, it can be determined that the detected SCI is the first SCI, or that the detected MAC-CE is the first MAC-CE.

In some embodiments, the first SCI or the first MAC-CE carries the time slot table of the base station. That is, the base station can use a format similar to Format2-0 to determine the optional uplink and downlink time slot allocation for the repeater through a pre-set time slot table.

The time slot table includes at least one of: an exclusive configuration table corresponding to the repeater, a general configuration table corresponding to the base station, or part of configuration rows of the general configuration table. When the time slot table is part of configuration rows of the general configuration table, the following can be specified: which rows the repeater can use. For example, it may be stipulated that the repeater can only use rows without flexible symbols.

It should be understood that each exclusive configuration table corresponds to only one repeater. When the repeater receives the exclusive configuration table, it can configure the time slot for the repeater according to the time slot configuration information in the exclusive configuration table. The general configuration table corresponding to the base station can correspond to multiple repeaters.

In example 1, the exclusive configuration table corresponding to the repeater can be seen in Table 1 below.

| Format | Symbol number in a slot | | | | | | | | | | | | | |
|---|---|---|---|---|---|---|---|---|---|---|---|---|---|---|
| | 0 | 1 | 2 | 3 | 4 | 5 | 6 | 7 | 8 | 9 | 10 | 11 | 12 | 13 |
| 0 | D | D | D | D | D | D | D | D | D | D | D | D | D | D |
| 1 | U | U | U | U | U | U | U | U | U | U | U | U | U | U |
| 2 | - | - | - | - | - | - | - | - | - | - | - | - | - | - |
| 3 | D | D | D | D | D | D | D | D | D | D | D | D | D | |
| 4 | D | D | D | D | D | D | D | D | D | D | D | D | - | - |
| 5 | D | D | D | D | D | D | D | D | D | D | D | - | - | - |
| 6 | D | D | D | D | D | D | D | D | D | D | - | - | - | - |
| 7 | D | D | D | D | D | D | D | D | D | - | - | - | - | - |
| 8 | - | - | - | - | - | - | - | - | - | - | - | - | - | U |
| 9 | - | - | - | - | - | - | - | - | - | - | - | - | U | U |
| 10 | - | U | U | U | U | U | U | U | U | U | U | U | U | U |
| 11 | - | - | U | U | U | U | U | U | U | U | U | U | U | U |
| 12 | - | - | - | U | U | U | U | U | U | U | U | U | U | U |
| 13 | - | - | - | - | U | U | U | U | U | U | U | U | U | U |
| 14 | - | - | - | - | - | U | U | U | U | U | U | U | U | U |
| 15 | - | - | - | - | - | - | U | U | U | U | U | U | U | U |
| 16 | D | - | D | - | - | - | - | - | U | U | U | U | U | U |

In example 2, the general configuration table corresponding to the base station can be seen in Table 2 below.

| Format | Symbol number in a slot | | | | | | | | | | | | | |
|---|---|---|---|---|---|---|---|---|---|---|---|---|---|---|
| | 0 | 1 | 2 | 3 | 4 | 5 | 6 | 7 | 8 | 9 | 10 | 11 | 12 | 13 |
| 0 | D | D | D | D | D | D | D | D | D | D | D | D | D | D |
| 1 | U | U | U | U | U | U | U | U | U | U | U | U | U | U |
| 2 | - | - | - | - | - | - | - | - | - | - | - | - | - | - |
| 3 | D | D | D | D | D | D | D | D | D | D | D | D | D | - |
| 4 | D | D | D | D | D | D | D | D | D | D | D | D | - | - |
| 5 | D | D | D | D | D | D | D | D | D | D | D | - | - | - |
| 6 | D | D | D | D | D | D | D | D | D | D | - | - | - | - |
| 7 | D | D | D | D | D | D | D | D | D | | - | - | - | - |
| 8 | - | - | - | - | - | - | - | - | - | - | - | - | - | U |
| 9 | - | - | - | - | - | - | - | - | - | - | - | - | U | U |
| 10 | - | U | U | U | U | U | U | U | U | U | U | U | U | U |
| 11 | - | - | U | U | U | U | U | U | U | U | U | U | U | U |
| 12 | - | - | - | U | U | U | U | U | U | U | U | U | U | U |
| 13 | - | - | - | - | U | U | U | U | U | U | U | U | U | U |
| 14 | - | - | - | - | - | U | U | U | U | U | U | U | U | U |
| 15 | - | - | - | - | - | - | U | U | U | U | U | U | U | U |
| 16 | D | - | - | - | - | - | - | - | - | - | - | - | - | - |
| 16 - 254 | Reserved | | | | | | | | | | | | | |
| 255 | UE determines the slot format for the slot based on tdd-UL-DL-ConfigurationCommon, or tdd-UL-DL-ConfigurationDedicated and, if any, on detected DCI formats | | | | | | | | | | | | | |

In the above Tables 1 and 2, "D" is used to represent the downlink time slot (symbol), "U" is used to represent the uplink time slot (symbol), "-" is used to represent the empty symbol or the symbol where no data forwarding is performed, and there is no flexible time slot (symbol) in the exclusive configuration table.

In some optional implementations, in a condition that the repeater receives the first SCI or the first MAC-CE sent by the base station, an ACK can be sent to the base station.

Alternatively, in a condition that the repeater does not receive the first SCI or the first MAC-CE sent by the base station, a NACK can be sent to the base station, and the NACK is used to instruct the base station to resend the first SCI or the first MAC-CE.

Correspondingly, if the base station receives the NACK sent by the repeater, the first SCI or the first MAC-CE is resent to the repeater until the ACK sent by the repeater is received.

In some optional implementations, the time slot configuration information of the base station can further be sent to the repeater in the form of parameter configuration.

Specifically, a new Format format may be defined, including but not limited to at least one of the following:
(1) 2 bits to indicate the signaling type (TDD time slot, beam indication, power off/on)
(2) configuration of 2 patterns may be used, with 1 bit indicating the quantity of patterns, where 0 is a single pattern and 1 is a double pattern; and
(3) the uplink and downlink time slots (symbols) of each pattern are indicated in a manner similar to SIB1 signaling.

When the uplink and downlink time slots of each pattern are indicated in a manner similar to SIB1 signaling, the time slot configuration information of the base station includes but is not limited to at least one of the following:
(1) a period of a downlink-uplink DL-UL pattern of the base station;
(2) a quantity of consecutive full downlink symbols at a beginning of the DL-UL pattern;
(3) a quantity of consecutive downlink symbols following a last full downlink time slot of the DL-UL pattern;
(4) a quantity of consecutive full uplink symbols at an end of the DL-UL pattern; and
(5) a quantity of consecutive uplink symbols in an end of a time slot preceding a first full uplink time slot of the DL-UL pattern.

S504, the repeater obtains the time slot configuration information according to the time slot table of the base station.

S505, the repeater obtains a time slot processing mode.

The time slot processing mode includes at least one of: a processing mode for an uplink time slot, a processing mode for a downlink time slot, or a processing mode for a flexible time slot.

The processing mode for the uplink time slot and the processing for the downlink time slot for the repeater can be determined according to the time slot configuration information indicated in the time slot table.

For the processing mode for the flexible time slot, in an embodiment of the present disclosure, the processing mode for the flexible time slot can be obtained in a variety of ways. For example, in a first aspect, the processing mode for the flexible time slot can be sent by the base station to the repeater, specifically, including the following steps.
(1) The base station sends a second SIB1 to the repeater, where the second SIB1 carries the processing mode for the flexible time slot.

It should be noted that the second SIB1 and the first SIB1 may be the same information, that is, the base station can send the processing mode for the flexible time slot while sending the time slot configuration information of the base station to the repeater; or the second SIB1 and the first SIB1 may further be different information.

It should be understood that in a condition that the second SIB1 and the first SIB1 are different information, the embodiments of the present disclosure do not specifically limit the execution order of step S505. For example, step S503 can be executed before steps S501 to S504.

(2) The repeater receives the second SIB1 sent by the base station, where the second SIB1 is used to indicate the processing mode for the flexible time slot for the repeater.

(3) The processing mode for the flexible time slot is obtained according to the second SIB1.

In the embodiments, the base station sends the processing mode for the flexible time slot to the repeater, and the base station can adjust the processing mode for the flexible time slot in real time according to the demand, having the time slot configuration result of the repeater more in line with the current data transmission demand.

In a second aspect, the processing mode for the flexible time slot for the repeater can further be pre-set through the protocol according to the repeater. In this way, compared with the solution of sending the processing mode for the flexible time slot by the base station in the above embodiments, the processing mode for the flexible time slot is obtained through the protocol without the intervention of the base station, which can reduce the signaling interaction between the base station and the repeater, reduce the implementation complexity of the present disclosure, and thus improve the time slot configuration efficiency of the repeater.

S506, the repeater configures a time slot for the repeater according to the time slot configuration information and the time slot processing mode.

It should be noted that step S506 is similar to the configuration manner in the embodiments of FIGS. 3 to 4 (a), and reference for the details can be made to the above embodiments, which will not be repeated here.

In the embodiments of the present disclosure, during configuration of the uplink and downlink time slots for the repeater, the processing mode for the flexible time slot is configured synchronously, so that uplink and downlink time slots can be configured for a repeater while avoiding the repeater from frequently reading scheduling information. In addition, a situation where a terminal or the base station cannot effectively send or receive data due to wrong time slot configuration for the repeater can be prevented, thereby ensuring normal communication.

Furthermore, compared with the scheme of sending the time slot configuration information through SIB1 in the aforementioned embodiments, in this embodiment, the base station can send the time slot configuration information of the base station to the repeater through MAC-CE or SCI. For the repeater that cannot read the RRC signaling, the time slot configuration information of the base station can further be accurately known in real time, thereby meeting the time slot configuration requirements of different types of repeaters.

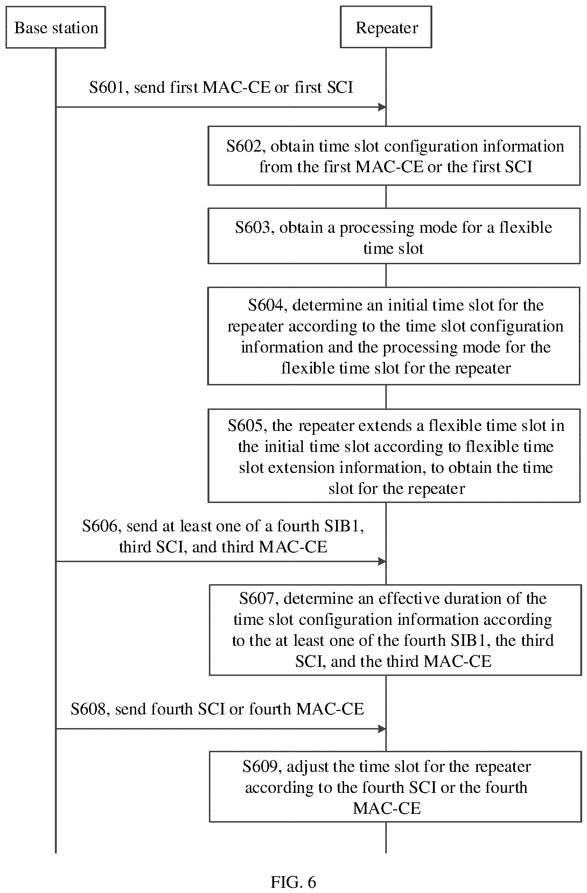

FIG. 6 is a signaling interaction diagram 4 of a time slot configuration method provided by an embodiment of the present disclosure. As shown in FIG. 6, the time slot configuration method includes the following steps.

S601, a base station sends first MAC-CE or first SCI to a repeater.

S602, the repeater obtains time slot configuration information from first MAC-CE or first SCI.

S603, the repeater obtains a processing mode for a flexible time slot.

S604, the repeater determines an initial time slot for the repeater according to the time slot configuration information and the processing mode for the flexible time slot for the repeater.

It should be noted that the implementations and beneficial effects of steps S601 to S603 are similar to those of steps S501 to S305 in the embodiments shown in FIG. 5. Please refer to the above embodiments for details which will not be repeated here.

As for the manner of determining the initial time slot in S604, it is similar to the scheme of determining the time slot for the repeater in the above embodiments. Please refer to the above embodiments for details which will not be repeated here.

S605, the repeater extends a flexible time slot in the initial time slot according to flexible time slot extension information, to obtain the time slot for the repeater.

The extension information is used to indicate the increase of the quantity of flexible time slots in the time slot for the repeater. The extension information includes but is not limited to at least one or more of: a position for extending the flexible time slot, a quantity for extending the flexible time slot, etc.

In a first implementation, the extension information may be obtained according to the protocol. In this process, no intervention of other devices (such as base stations) is required, which can reduce the signaling interaction between these devices and the repeater, reduce the implementation complexity of the present disclosure, and thus improve the time slot configuration efficiency of the repeater.

In a second implementation, the base station can further send the extension information to the repeater, specifically, including the following steps:
(1) the base station sends a radio resource control signaling (Radio Resource Control, RRC), second SCI or second MAC-CE to the repeater, where the RRC signaling, the second SCI or the second MAC-CE carries the flexible time slot extension information;
(2) the repeater receives the RRC signaling, the second SCI or the second MAC-CE sent by the base station, and obtains the flexible time slot extension information therefrom; and
(3) the repeater extends the flexible time slot in the initial time slot according to the flexible time slot extension information, to obtain the time slot for the repeater.

For example, taking the flexible time slot extension information being the quantity for extending the flexible time slot as an example, the flexible time slot extension information includes at least one of:
(1) a total quantity of flexible time slots to be extended;
(2) a first quantity of uplink time slots to be extended; and
(3) a second quantity of downlink time slots to be extended.

It should be noted that for the extension manner corresponding to the flexible time slot extension information, please refer to step S405 in the embodiments of FIG. 4 (a), which will not be repeated here.

S606, the base station sends at least one of a fourth SIB1, third SCI, and third MAC-CE to the repeater.

The at least one of the fourth SIB1, the third SCI, and the third MAC-CE is used to indicate an effective duration of the time slot configuration information.

S607, the repeater determines an effective duration of the time slot configuration information according to the at least one of the fourth SIB1, the third SCI, and the third MAC-CE.

It should be noted that for a repeater that can read RRC signaling, the repeater can determine the effective duration through at least one of the fourth SIB1, the third SCI, and the third MAC-CE. For a repeater that cannot read RRC signaling, the effective duration can be determined through at least one of the third SCI and the third MAC-CE, thereby meeting the time slot configuration requirements of different repeaters.

S608, the base station sends fourth SCI or fourth MAC-CE to the repeater.

The fourth SCI or the fourth MAC-CE is used to instruct the repeater to adjust the time slot for the repeater, and the fourth SCI or the fourth MAC-CE carries the current time slot configuration information of the base station.

S609, the repeater adjusts the time slot for the repeater according to the fourth SCI or the fourth MAC-CE.

In one scenario, the base station may periodically send the fourth SCI or the fourth MAC-CE to the repeater according to a preset period. Accordingly, when the repeater receives the fourth SCI or the fourth MAC-CE, the repeater adjusts the time slot for the repeater according to the current time slot configuration information of the base station carried in the fourth SCI or the fourth MAC-CE. Optionally, when the time slot configuration information does not change compared with the previous time slot configuration information, the repeater does not adjust the current time slot.

In another scenario, the base station may further send the fourth SCI or the fourth MAC-CE to the repeater when its time slot configuration information changes, and the fourth SCI or the fourth MAC-CE carries the changed time slot configuration information, so that the repeater adjusts the time slot in time.

In some optional implementations, in a condition that the time slot configuration information corresponding to the fourth SCI or the fourth MAC-CE is inconsistent with the time slot configuration information corresponding to the first SIB1, the time slot configuration information corresponding to the fourth SCI or the fourth MAC-CE is determined as target time slot configuration information.

Further, the time slot for the repeater is configured according to the target time slot configuration information and the processing mode for the flexible time slot.

It should be understood that the specific implementation of configuring the time slot for the repeater according to the target time slot configuration information and the processing mode for the flexible time slot is similar to the scheme in the aforementioned embodiments, and will not be repeated here.

In the embodiments of the present disclosure, the time slot configured by the repeater can be adjusted in real time to meet the communication needs of various scenarios.

It should be noted that any one or more of the fourth SIB1, the third SIB 1, the second SIB1, and the first SIB1 mentioned above can be the same information or different information; similarly, any one or more of the third SCI, the second SCI, and the first SCI can be the same information or different information; any one or more of the third MAC-CE, the second MAC-CE, and the first MAC-CE can be the same information or different information, which is not limited in the embodiments of the present disclosure.

In addition, the above steps S608 to S609 are optional steps. For example, when the time slot configuration information of the base station has not changed, the time slot for the repeater may not be adjusted.

It should be understood that although the steps in the flowchart in the above embodiments are displayed in sequence according to the arrows, these steps are not necessarily executed in the order indicated by the arrows. Unless otherwise specified herein, the execution of these steps is not strictly limited in order and can be executed in other orders. Moreover, at least part of the steps in the figures may include multiple sub-steps or multiple stages, which are not necessarily executed at the same time, but can be executed at different time, and their execution order is not necessarily sequential, but can be executed in turn or alternately with other steps or at least part of the sub-steps or stages of other steps.

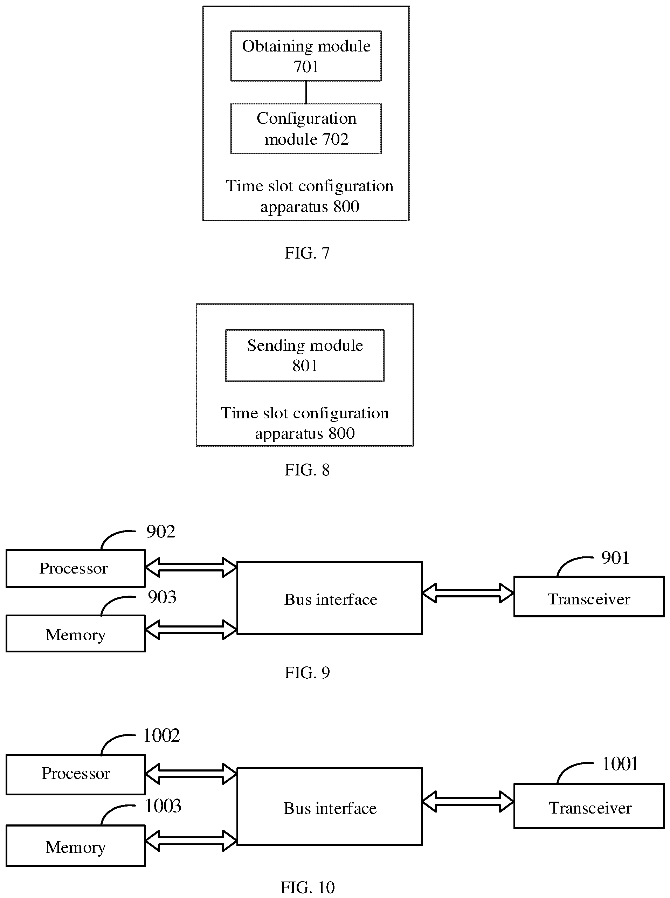

On the repeater side, an embodiment of the present disclosure provides a time slot configuration apparatus, which is applied to the repeater. FIG. 7 is a schematic structural diagram of a time slot configuration apparatus provided by an embodiment of the present disclosure. As shown in FIG. 7, a time slot configuration apparatus 700 includes:
an obtaining module 701, configured to obtain time slot configuration information of a base station and a time slot processing mode for the repeater; and a configuration module 702, configured to configure a time slot for the repeater according to the time slot configuration information and the time slot processing mode;
where the time slot processing mode includes at least one of: a processing mode for an uplink time slot, a processing mode for a downlink time slot, or a processing mode for a flexible time slot.

In some embodiments, the obtaining module 701 is specifically configured to: receive a first system information block SIB 1 sent by the base station; and obtain the time slot configuration information according to the first SIB1.

In some embodiments, the obtaining module 701 is specifically configured to: in a condition that the repeater accesses the base station, descramble Type0-PDCCH based on a preset system information-radio network temporary identifier SI-RNTI; determine physical downlink control channel PDCCH information according to the descrambled Type0-PDCCH, where the PDCCH information at least includes resource location information for a physical downlink shared channel PDSCH; and receive, through a PDCCH, the first SIB1 transmitted over the PDSCH.

In some embodiments, the obtaining module 701 is specifically configured to: receive first sidelink control information SCI or first medium access control-control element information MAC-CE sent by the base station; and obtain the time slot configuration information according to the first SCI or the first MAC-CE.

In some embodiments, the obtaining module 701 is specifically configured to: receive SCI or MAC-CE sent by the base station; blindly check the SCI or the MAC-CE, and obtain the first SCI from the blindly checked SCI, or obtain the first MAC-CE from the blindly checked MAC-CE.

In some embodiments, the obtaining the time slot configuration information according to the first SCI or the first MAC-CE includes: obtaining time slot table of the base station in the first SCI or the first MAC-CE; and obtaining the time slot configuration information and the time slot processing mode according to the time slot table of the base station; where the time slot table includes at least one of: an exclusive configuration table corresponding to the repeater, a general configuration table corresponding to the base station, or part or all of configuration rows of the general configuration table; the time slot processing mode includes at least one of: no flexible time slot being configured in the time slot for the repeater, no forwarding operation being performed at any flexible time slot in the time slot for the repeater, and a target row in the time slot for the repeater being used for forwarding data.

In some embodiments, the obtaining module 701 is further configured to: send an ACK to the base station in a condition that the first SCI or the first MAC-CE sent by the base station is received; or send a NACK to the base station in a condition that the first SCI or the first MAC-CE sent by the base station is not received, where the NACK is used to instruct the base station to resend the first SCI or the first MAC-CE.

In some embodiments, the time slot configuration information includes at least one of: a period of a downlink-uplink DL-UL pattern of the base station; a quantity of consecutive full downlink symbols at a beginning of the DL-UL pattern;
a quantity of consecutive downlink symbols following a last full downlink time slot of the DL-UL pattern;
a quantity of consecutive full uplink symbols at an end of the DL-UL pattern; and
a quantity of consecutive uplink symbols in an end of a time slot preceding a first full uplink time slot of the DL-UL pattern.

In some embodiments, the obtaining module 701 is specifically configured to: receive a second SIB1 sent by the base station, where the second SIB1 is used to indicate the time slot processing mode for the repeater; and obtain the time slot processing mode according to the second SIB 1; where in a condition that the time slot processing mode is the processing mode for the flexible time slot, the time slot processing mode for the repeater includes at least one of: no forwarding operation being performed at any of the flexible time slot;
forwarding operation being performed at each of the flexible time slot as per an uplink time slot;
forwarding operation being performed at each of the flexible time slot as per a downlink time slot; and
forwarding operation being performed at some of the flexible time slot as per an uplink time slot, and forwarding operation being performed at some of the flexible time slot as per a downlink time slot.

In some embodiments, the obtaining module 701 is further configured to: receive a third SIB 1 sent by the base station; where the third SIB1 is used to indicate that forwarding operation at a first time slot is performed as per the uplink time slot, and/or that forwarding operation at a second time slot is performed as per the downlink time slot, where the first time slot and the second time slot are any specified time slot in the flexible time slot.

In some embodiments, the configuration module 702 is specifically configured to: determine an initial time slot for the repeater according to the time slot configuration information and the time slot processing mode for the repeater; and extend a flexible time slot in the initial time slot according to flexible time slot extension information, to obtain the time slot for the repeater.

In some embodiments, the configuration module 702 is specifically configured to: receive second SCI or second MAC-CE sent by the base station, where the second SCI or the second MAC-CE carries the flexible time slot extension information; and extend the flexible time slot in the initial time slot according to the flexible time slot extension information, to obtain the time slot for the repeater; where the flexible time slot extension information includes at least one of: a total quantity of flexible time slots to be extended;
a first quantity of uplink time slots to be extended; and
a second quantity of downlink time slots to be extended.

In some embodiments, the obtaining module 701 is further configured to: receive at least one of a fourth SIB1, third SCI, and third MAC-CE sent by the base station; and determine an effective duration of the time slot configuration information according to the at least one of the fourth SIB1, the third SCI, and the third MAC-CE.

In some embodiments, the obtaining module 701 is further configured to: receive fourth SCI or fourth MAC-CE sent by the base station; and adjust the time slot for the repeater according to the fourth SCI or the fourth MAC-CE.

In some embodiments, the configuration module 702 is further configured to: in a condition that the time slot configuration information corresponding to the fourth SCI or the fourth MAC-CE is inconsistent with the time slot configuration information corresponding to the first SIB1, determine the time slot configuration information corresponding to the fourth SCI or the fourth MAC-CE as target time slot configuration information; and configure the time slot for the repeater according to the target time slot configuration information and the processing mode for the flexible time slot.

It should be noted that the above-mentioned time slot configuration apparatus provided by the present disclosure can correspondingly implement all the method steps implemented by the repeater in the above-mentioned time slot configuration method embodiments, and can achieve the same technical effects. The parts and beneficial effects of this embodiment that are the same as the method embodiment will not be specifically described here.

On the base station side, an embodiment of the present disclosure provides a time slot configuration apparatus, which is applied to the base station. FIG. 8 is a schematic structural diagram 2 of a time slot configuration apparatus provided by an embodiment of the present disclosure. As shown in FIG. 8, a time slot configuration apparatus 800 includes:
a sending module 801, configured to send at least one of a first SIB 1, first MAC-CE or first SCI to a repeater, where the at least one of the first SIB1, the first MAC-CE or the first SCI carries time slot configuration information of the base station;
where the at least one of the first SIB1, the first MAC-CE or the first SCI is used to instruct the repeater to configure a time slot for the repeater according to the time slot configuration information and a time slot processing mode, where the time slot processing mode includes at least one of: a processing mode for an uplink time slot, a processing mode for a downlink time slot and a processing mode for a flexible time slot.

In some embodiments, the sending module 801 is specifically configured to: scramble Type0-PDCCH using an SI-RNTI; and send the first SIB1 to the repeater through the scrambled Type0-PDCCH.

In some embodiments, the sending module 801 is specifically configured to: send the first MAC-CE or the first SCI carrying a time slot table of the base station to the repeater, where the first MAC-CE or the first SCI is used to instruct the repeater to obtain the time slot configuration information of the base station;
where the time slot table of the base station includes at least one of: an exclusive configuration table corresponding to the repeater, a general configuration table corresponding to the base station, or part or all of configuration rows of the general configuration table, and the time slot processing mode includes at least one of: no flexible time slot being configured in the time slot for the repeater, no forwarding operation being performed at any flexible time slot in the time slot for the repeater, and a target row in the time slot for the repeater being used for forwarding data.

In some embodiments, the sending module 801 is further configured to: in a condition that a NACK sent by the repeater is received, resend the first MAC-CE or the first SCI to the repeater, where the NACK is used to indicate that the repeater has not received the first MAC-CE or the first SCI currently.

In some embodiments, the time slot configuration information includes at least one of: a period of a DL-UL pattern of the base station; a quantity of consecutive full downlink symbols at a beginning of the DL-UL pattern;
a quantity of consecutive downlink symbols following a last full downlink time slot of the DL-UL pattern;
a quantity of consecutive full uplink symbols at an end of the DL-UL pattern; and
a quantity of consecutive uplink symbols in an end of a time slot preceding a first full uplink time slot of the DL-UL pattern.

In some embodiments, the processing mode for the flexible time slot for the repeater includes at least one of: no forwarding operation being performed at any of the flexible time slot; forwarding operation being performed at each of the flexible time slot as per an uplink time slot; forwarding operation being performed at each of the flexible time slot as per a downlink time slot; and forwarding operation being performed at some of the flexible time slot as per an uplink time slot, and forwarding operation being performed at some of the flexible time slot as per a downlink time slot.

In some embodiments, the sending module 801 is further configured to: send a third SIB1 to the repeater, where the third SIB1 is used to indicate that forwarding operation at a first time slot is performed as per an uplink time slot, and/or that forwarding operation at a second time slot is performed as per the downlink time slot, where the first time slot and the second time slot are any specified time slot in the flexible time slot.

In some embodiments, the sending module 801 is further configured to: send second SCI or second MAC-CE to the repeater, where the second SCI or the second MAC-CE carries flexible time slot extension information, and the extension information is used to instruct the repeater to extend the flexible time slot for the repeater; the extension information includes at least one of: a total quantity of flexible time slots to be extended;
a first quantity of uplink time slots to be extended; and
a second quantity of downlink time slots to be extended.

In some embodiments, the sending module 801 is further specifically configured to: send at least one of a fourth SIB1, third SCI, and third MAC-CE to the repeater, where the at least one of the fourth SIB1, the third SCI, and the third MAC-CE is used to indicate an effective duration of the time slot configuration information.

In some embodiments, the sending module 801 is further specifically configured to: send fourth SCI or fourth MAC-CE to the repeater, where the fourth SCI or the fourth MAC-CE is used to instruct the repeater to adjust the time slot for the repeater.

It should be noted that the above-mentioned apparatus provided by the present disclosure can correspondingly implement all the method steps implemented by the base station in the above-mentioned time slot configuration method embodiments, and can achieve the same technical effects. The parts and beneficial effects of this embodiment that are the same as those of the method embodiments will not be described in detail here.

An embodiment of the present disclosure provides a repeater, and FIG. 9 is a schematic structural diagram of a repeater provided by an embodiment of the present disclosure. As shown in FIG. 9, a repeater 900 includes: a transceiver 901, a processor 902 and a memory 903.

The memory 903 is configured to store a computer program.

The transceiver 901 is configured to receive and send data under the control of the processor 902.

In FIG. 9, the bus architecture may include any quantity of interconnected buses and bridges, where specifically various circuits of one or more processors represented by the processor 902 and the memory represented by the memory 903 are linked together. The bus architecture can further link together various other circuits such as peripheral devices, voltage regulators and power management circuits, which are well known in the art and thus are not further described herein. The bus interface provides an interface. The transceiver 901 may be a plurality of components, namely, a transmitter and a receiver, providing a unit for communicating with various other devices on a transmission medium, such as a wireless channel, a wired channel, an optical cable, and the like. The processor 902 is responsible for managing the bus architecture and general processing, and the memory 903 may store data used by the processor 902 when performing operations.

The processor 902 is responsible for managing the bus architecture and general processing, and the memory 903 may store data used by the processor 902 when performing operations.

Optionally, the processor 902 may be a central processing unit (central processing unit, CPU), an application specific integrated circuit (Application Specific Integrated Circuit, ASIC), a field programmable gate array (Field-Programmable Gate Array, FPGA), or a complex programmable logic device (Complex Programmable Logic Device, CPLD), and the processor 902 may further adopt a multi-core architecture.

The processor 902 calls the computer program stored in the memory 903 to execute any time slot configuration method of the network device provided in the embodiments of the present disclosure according to the obtained executable instructions, and the processor and the memory may further be arranged physically separately.

The processor 902 is configured to read the computer program in the memory and perform the following operations: obtaining time slot configuration information of a base station and a time slot processing mode for the repeater; and configuring a time slot for the repeater according to the time slot configuration information and the time slot processing mode; where the time slot processing mode includes at least one of: a processing mode for an uplink time slot, a processing mode for a downlink time slot, or a processing mode for a flexible time slot.

In some embodiments, the obtaining the time slot configuration information of the base station includes: receiving a first system information block SIB1 sent by the base station; and obtaining the time slot configuration information according to the first SIB1.

In some embodiments, the receiving the first SIB1 sent by the base station includes: in a condition that the repeater accesses the base station, descrambling Type0-PDCCH based on a preset system information-radio network temporary identifier SI-RNTI; determining physical downlink control channel PDCCH information according to the descrambled Type0-PDCCH, where the PDCCH information at least includes resource location information for a physical downlink shared channel PDSCH; and receiving, through a PDCCH, the first SIB1 transmitted over the PDSCH.

In some embodiments, the obtaining the time slot configuration information of the base station includes: receiving first sidelink control information SCI or first medium access control-control element information MAC-CE sent by the base station; and obtaining the time slot configuration information according to the first SCI or the first MAC-CE.

In some embodiments, the receiving the first SCI or the first MAC-CE sent by the base station includes: receiving SCI or MAC-CE sent by the base station; blindly checking the SCI or the MAC-CE, and obtaining the first SCI from the blindly checked SCI, or obtaining the first MAC-CE from the blindly checked MAC-CE.

In some embodiments, the obtaining the time slot configuration information according to the first SCI or the first MAC-CE includes: obtaining a time slot table of the base station in the first SCI or the first MAC-CE; and obtaining the time slot configuration information and the time slot processing mode according to the time slot table of the base station; where the time slot table includes at least one of: an exclusive configuration table corresponding to the repeater, a general configuration table corresponding to the base station, or part or all of configuration rows of the general configuration table; the time slot processing mode includes at least one of: no flexible time slot being configured in the time slot for the repeater, no forwarding operation being performed at any flexible time slot in the time slot for the repeater, and a target row in the time slot for the repeater being used for forwarding data.

In some embodiments, the processor 902 is further configured to: send an acknowledgement ACK to the base station in a condition that the first SCI or the first MAC-CE sent by the base station is received; or send a negative acknowledgement NACK to the base station in a condition that the first SCI or the first MAC-CE sent by the base station is not received, where the NACK is used to instruct the base station to resend the first SCI or the first MAC-CE.

In some embodiments, the time slot configuration information includes at least one of: a period of a downlink-uplink DL-UL pattern of the base station;
a quantity of consecutive full downlink symbols at a beginning of the DL-UL pattern;
a quantity of consecutive downlink symbols following a last full downlink time slot of the DL-UL pattern;
a quantity of consecutive full uplink symbols at an end of the DL-UL pattern; and
a quantity of consecutive uplink symbols in an end of a time slot preceding a first full uplink time slot of the DL-UL pattern.

In some embodiments, the obtaining the time slot processing mode for the repeater includes: receiving a second SIB1 sent by the base station, where the second SIB1 is used to indicate the time slot processing mode for the repeater; and obtaining the time slot processing mode according to the second SIB1; where in a condition that the time slot processing mode is the processing mode for the flexible time slot, the time slot processing mode for the repeater includes at least one of: no forwarding operation being performed at any of the flexible time slot;
forwarding operation being performed at each of the flexible time slot as per an uplink time slot;
forwarding operation being performed at each of the flexible time slot as per a downlink time slot; and
forwarding operation being performed at some of the flexible time slot as per an uplink time slot, and forwarding operation being performed at some of the flexible time slot as per a downlink time slot.

In some embodiments, the processor 902 is further configured to: receive a third SIB1 sent by the base station; where the third SIB1 is used to indicate that forwarding operation at a first time slot is performed as per the uplink time slot, and/or that forwarding operation at a second time slot is performed as per the downlink time slot, where the first time slot and the second time slot are any specified time slot in the flexible time slot.

In some embodiments, the configuring the time slot for the repeater according to the time slot configuration information and the time slot processing mode for the repeater includes: determining an initial time slot for the repeater according to the time slot configuration information and the time slot processing mode for the repeater; and extending a flexible time slot in the initial time slot according to flexible time slot extension information, to obtain the time slot for the repeater.

In some embodiments, the extending the flexible time slot in the initial time slot according to the flexible time slot extension information, to obtain the time slot for the repeater includes: receiving second SCI or second MAC-CE sent by the base station, where the second SCI or the second MAC-CE carries the flexible time slot extension information; and extending the flexible time slot in the initial time slot according to the flexible time slot extension information, to obtain the time slot for the repeater; where the flexible time slot extension information includes at least one of:
a total quantity of flexible time slots to be extended;
a first quantity of uplink time slots to be extended; and
a second quantity of downlink time slots to be extended.

In some embodiments, the processor 902 is further configured to: receive at least one of a fourth SIB1, third SCI, and third MAC-CE sent by the base station; and determine an effective duration of the time slot configuration information according to the at least one of the fourth SIB1, the third SCI, and the third MAC-CE.

In some embodiments, the processor 902 is further configured to: receive fourth SCI or fourth MAC-CE sent by the base station; and adjust the time slot for the repeater according to the fourth SCI or the fourth MAC-CE.

In some embodiments, the adjusting the time slot for the repeater according to the fourth SCI or the fourth MAC-CE includes: in a condition that the time slot configuration information corresponding to the fourth SCI or the fourth MAC-CE is inconsistent with the time slot configuration information corresponding to the first SIB1, determining the time slot configuration information corresponding to the fourth SCI or the fourth MAC-CE as target time slot configuration information; and configuring the time slot for the repeater according to the target time slot configuration information and the processing mode for the flexible time slot.

It should be noted that the above-mentioned repeater provided by the present disclosure can implement all the method steps implemented by the repeater in the above-mentioned method embodiments, and can achieve the same technical effects. The parts and beneficial effects that are the same as those in the method embodiments will not be described in detail here.

An embodiment of the present disclosure provides a base station, and FIG. 10 is a schematic structural diagram of a base station provided by an embodiment of the present disclosure. As shown in FIG. 10, a base station 1000 includes: a transceiver 1001, a processor 1002 and a memory 1003.

The memory 1003 is configured to store a computer programs.

The transceiver 1001 is configured to receive and send data under the control of the processor 1002.

In FIG. 10, the bus architecture may include any quantity of interconnected buses and bridges, where specifically various circuits of one or more processors represented by the processor 1002 and the memory represented by the memory 1003 are linked together. The bus architecture may further link together various other circuits such as peripheral devices, voltage regulators, and power management circuits, which are well known in the art and are therefore not further described herein. The bus interface provides an interface. The transceiver 1001 may be a plurality of components, namely, a transmitter and a receiver, providing a unit for communicating with various other devices on a transmission medium, such as a wireless channel, a wired channel, an optical cable, and the like. The processor 1002 is responsible for managing the bus architecture and general processing, and the memory 1003 may store data used by the processor 1002 when performing operations.

The processor 1002 is responsible for managing the bus architecture and general processing, and the memory 1003 may store data used by the processor 1002 when performing operations.

Optionally, the processor 1002 may be a central processing unit (central processing unit, CPU), an application specific integrated circuit (Application Specific Integrated Circuit, ASIC), a field programmable gate array (Field-Programmable Gate Array, FPGA), or a complex programmable logic device (Complex Programmable Logic Device, CPLD), and the processor 1002 may further adopt a multi-core architecture.

The processor 1002 calls the computer program stored in the memory 1003 to execute any time slot configuration method of the network device provided in the embodiments of the present disclosure according to the obtained executable instructions, and the processor and the memory may further be physically arranged separately.

The processor 1002 is configured to read the computer program in the memory and perform the following operations:
sending at least one of a first SIB1, first MAC-CE or first SCI to a repeater, where the at least one of the first SIB1, the first MAC-CE or the first SCI carries time slot configuration information of the base station; where the at least one of the first SIB1, the first MAC-CE or the first SCI is used to instruct the repeater to configure a time slot for the repeater according to the time slot configuration information and a time slot processing mode, where the time slot processing mode includes at least one of: a processing mode for an uplink time slot, a processing mode for a downlink time slot and a processing mode for a flexible time slot.

In some embodiments, the sending the first SIB1 to the repeater includes: scrambling Type0-PDCCH using an SI-RNTI; and sending the first SIB1 to the repeater through the scrambled Type0-PDCCH.

In some embodiments, the sending the first MAC-CE or the first SCI to the repeater includes: sending the first MAC-CE or the first SCI carrying a time slot table of the base station to the repeater, where the first MAC-CE or the first SCI is used to instruct the repeater to obtain the time slot configuration information of the base station; where the time slot table of the base station includes at least one of: an exclusive configuration table corresponding to the repeater, a general configuration table corresponding to the base station, or part or all of configuration rows of the general configuration table, and the time slot processing mode includes at least one of: no flexible time slot being configured in the time slot for the repeater, no forwarding operation being performed at any flexible time slot in the time slot for the repeater, and a target row in the time slot for the repeater being used for forwarding data.

In some embodiments, the processor 1002 is further configured to: in a condition that a NACK sent by the repeater is received, resend the first MAC-CE or the first SCI to the repeater, where the NACK is used to indicate that the repeater has not received the first MAC-CE or the first SCI currently.

In some embodiments, the time slot configuration information includes at least one of: a period of a DL-UL pattern of the base station;
a quantity of consecutive full downlink symbols at a beginning of the DL-UL pattern;
a quantity of consecutive downlink symbols following a last full downlink time slot of the DL-UL pattern;
a quantity of consecutive full uplink symbols at an end of the DL-UL pattern; and
a quantity of consecutive uplink symbols in an end of a time slot preceding a first full uplink time slot of the DL-UL pattern.

In some embodiments, in a condition that the time slot processing mode is the processing mode for the flexible time slot, the processing mode for the flexible time slot for the repeater includes at least one of: no forwarding operation being performed at any of the flexible time slot;
forwarding operation being performed at each of the flexible time slot as per an uplink time slot;
forwarding operation being performed at each of the flexible time slot as per a downlink time slot; and
forwarding operation being performed at some of the flexible time slot as per an uplink time slot, and forwarding operation being performed at some of the flexible time slot as per a downlink time slot.

In some embodiments, the processor 1002 is further configured to: send a third SIB1 to the repeater, where the third SIB1 is used to indicate that forwarding operation at a first time slot is performed as per an uplink time slot, and/or that forwarding operation at a second time slot is performed as per the downlink time slot, where the first time slot and the second time slot are any specified time slot in the flexible time slot.

In some embodiments, the processor 1002 is further configured to: send second SCI or second MAC-CE to the repeater, where the second SCI or the second MAC-CE carries flexible time slot extension information, and the extension information is used to instruct the repeater to extend the flexible time slot for the repeater; the extension information includes at least one of:
a total quantity of flexible time slots to be extended;
a first quantity of uplink time slots to be extended; and
a second quantity of downlink time slots to be extended.

In some embodiments, the processor 1002 is further configured to: send at least one of a fourth SIB1, third SCI, and third MAC-CE to the repeater, where the at least one of the fourth SIB1, the third SCI, and the third MAC-CE is used to indicate an effective duration of the time slot configuration information.

In some embodiments, the processor is further configured to: send fourth SCI or fourth MAC-CE to the repeater, where the fourth SCI or the fourth MAC-CE is used to instruct the repeater to adjust the time slot for the repeater.

It should be noted that the above-mentioned base station provided by the present disclosure can implement all the method steps implemented by the base station in the above-mentioned method embodiments, and can achieve the same technical effects. The parts and beneficial effects that are the same as those in the method embodiments will not be described in detail here.

It should be noted that the division of units in the embodiments of the present disclosure is for example purposes, which is only a logical function division, and there may be other division modes in actual implementation. In addition, functional units in the embodiments of the present disclosure can be integrated into a processing unit, or each unit can exist physically separately, or two or more units can be integrated into one unit. The above-mentioned integrated unit can be implemented in the form of hardware or in the form of a software functional unit.

If the above-mentioned integrated unit is implemented in the form of a software functional unit and sold or used as an independent product, it can be stored in a processor-readable storage medium. Based on this understanding, the technical solution of the present disclosure, in essence, or the part that contributes to the prior art, or all or part of the technical solution can be embodied in the form of a software product. The computer software product is stored in a storage medium, including several instructions to enable a computer device (which can be a personal computer, a server, or a network device, etc.) or a processor (processor) to execute all or part of the steps of the methods of the embodiments of the present disclosure. The aforementioned storage medium includes: U disk, mobile hard disk, read-only memory (Read-Only Memory, ROM), random access memory (Random Access Memory, RAM), disk or optical disk, etc., which can store program codes.

On the repeater side, an embodiment of the present disclosure provides a processor-readable storage medium, which stores a computer program. The computer program is used to enable a processor to execute the time slot configuration method corresponding to the repeater provided in the embodiments of the present disclosure, so that the processor can implement all the method steps implemented by the repeater in the above method embodiments, and can achieve the same technical effects. The parts and beneficial effects of this embodiment that are the same as the method embodiments will not be described in detail here.

On the base station side, an embodiment of the present disclosure provides a processor-readable storage medium, which stores a computer program. The computer program is used to enable a processor to execute the time slot configuration method corresponding to the base station provided in the embodiments of the present disclosure, so that the processor can implement all the method steps implemented by the base station in the above method embodiments, and can achieve the same technical effects. The parts and beneficial effects that are the same as those in the method embodiments will not be described in detail here.

The above-mentioned processor-readable storage medium can be any available medium or data storage device that the processor can access, including but not limited to magnetic storage (such as floppy disk, hard disk, tape, magneto-optical disk (MO), etc.), optical storage (such as CD, DVD, BD, HVD, etc.), and semiconductor storage (such as ROM, EPROM, EEPROM, non-volatile memory (NAND FLASH), solid state drive (SSD)) and the like.

On the repeater side, an embodiment of the present disclosure further provides a computer program product containing instructions, where a computer program is stored in a storage medium, at least one processor can read the computer program from the storage medium, at least one processor can implement all the method steps implemented by the repeater in the above method embodiments when the computer program is executed, and can achieve the same technical effects, and the parts and beneficial effects that are the same as the method embodiments in this embodiment will not be described in detail here.

On the base station side, an embodiment of the present disclosure further provides a computer program product containing instructions, where a computer program is stored in a storage medium, at least one processor can read the computer program from the storage medium, at least one processor can implement all the method steps implemented by the base station in the above method embodiments when the computer program is executed, and can achieve the same technical effects, and the parts and beneficial effects that are the same as the method embodiments in this embodiment will not be described in detail here.

An embodiment of the present disclosure further provides a communication system, including at least one repeater and at least one base station connected to the repeater; where the repeater can execute all the method steps executed by the repeater end in the above method embodiments and can achieve the same technical effects, and the base station can execute all the method steps executed by the base station end in the above method embodiments and can achieve the same technical effects. The parts and beneficial effects of this embodiment that are the same as those of the method embodiments will not be described in detail here.

It should be understood by those skilled in the art that the embodiments of the present disclosure can be provided as a method, a system, or a computer program product, and therefore, the present disclosure can be in the form of a complete hardware embodiment, a complete software embodiment, or an embodiment combining software and hardware. Moreover, the present disclosure can be in the form of a computer program product implemented on one or more computer-usable storage media (including but not limited to disk storage and optical storage, etc.) containing computer-usable program codes.

The present disclosure is described with reference to the schematic signaling interaction diagram and/or block diagram of the method, the apparatus, and the computer program product according to the embodiments of the present disclosure. It should be understood that each process and/or box in the signaling interaction diagram and/or block diagram, as well as the combination of processes and/or boxes in the signaling interaction diagram and/or block diagram, can be implemented by computer executable instructions. These computer executable instructions can be provided to a processor of a general-purpose computer, a special-purpose computer, an embedded processor, or other programmable data processing device to produce a machine, so that the instructions executed by the processor of the computer or other programmable data processing device produce a device for implementing the functions specified in one or more processes in the signaling interaction diagram and/or one or more boxes in the block diagram.

These processor executable instructions can further be stored in a processor readable memory that can guide a computer or other programmable data processing device to work in a specific manner, so that the instructions stored in the processor readable memory produce a manufactured product including an instruction apparatus, which implements the functions specified in one or more processes in the signaling interaction diagram and/or one or more boxes in the block diagram.

These processor executable instructions can further be loaded onto a computer or other programmable data processing device, so that a series of operation steps are executed on the computer or other programmable device to produce computer-implemented processing, so that the instructions executed on the computer or other programmable device provide steps for implementing the functions specified in one or more processes of the signaling interaction diagram and/or one or more blocks of the block diagram.

Obviously, those skilled in the art can make various modifications and variations to the present disclosure without departing from the spirit and scope of the present disclosure. Thus, if these modifications and variations of the present disclosure fall within the scope of the claims of the present disclosure and their equivalent technologies, the present disclosure is further intended to include these modifications and variations.

## Claims

1. A time slot configuration method, which is **characterized by** being applied to a repeater and comprising: obtaining time slot configuration information of a base station and a time slot processing mode for the repeater; and configuring a time slot for the repeater according to the time slot configuration information and the time slot processing mode;
wherein the time slot processing mode comprises at least one of: a processing mode for an uplink time slot, a processing mode for a downlink time slot, or a processing mode for a flexible time slot.

2. The time slot configuration method according to claim 1, wherein the obtaining the time slot configuration information of the base station comprises: receiving a first system information block SIB1 sent by the base station; and obtaining the time slot configuration information according to the first SIB1.

3. The time slot configuration method according to claim 2, wherein the receiving the first SIB1 sent by the base station comprises: in a condition that the repeater accesses the base station, descrambling Type0-PDCCH based on a preset system information-radio network temporary identifier SI-RNTI; determining physical downlink control channel PDCCH information according to the descrambled Type0-PDCCH, wherein the PDCCH information at least comprises resource location information for a physical downlink shared channel PDSCH; and receiving, through a PDCCH, the first SIB1 transmitted over the PDSCH.

4. The time slot configuration method according to claim 1, wherein the obtaining the time slot configuration information of the base station comprises: receiving first sidelink control information SCI or first medium access control-control element information MAC-CE sent by the base station; and obtaining the time slot configuration information according to the first SCI or the first MAC-CE.

5. The time slot configuration method according to claim 4, wherein the receiving the first SCI or the first MAC-CE sent by the base station comprises: receiving SCI or MAC-CE sent by the base station; blindly checking the SCI or the MAC-CE, and obtaining the first SCI from the blindly checked SCI, or obtaining the first MAC-CE from the blindly checked MAC-CE.

6. The time slot configuration method according to claim 4, wherein the obtaining the time slot configuration information according to the first SCI or the first MAC-CE comprises: obtaining a time slot table of the base station in the first SCI or the first MAC-CE; and obtaining the time slot configuration information and the time slot processing mode according to the time slot table of the base station;
wherein the time slot table comprises at least one of: an exclusive configuration table corresponding to the repeater, a general configuration table corresponding to the base station, or part or all of configuration rows of the general configuration table;
the time slot processing mode comprises at least one of: no flexible time slot being configured in the time slot for the repeater, no forwarding operation being performed at any flexible time slot in the time slot for the repeater, and a target row in the time slot for the repeater being used for forwarding data.

7. The time slot configuration method according to claim 4, further comprising: sending an acknowledgement ACK to the base station in a condition that the first SCI or the first MAC-CE sent by the base station is received;
or sending a negative acknowledgement NACK to the base station in a condition that the first SCI or the first MAC-CE sent by the base station is not received, wherein the NACK is used to instruct the base station to resend the first SCI or the first MAC-CE.

8. The time slot configuration method according to any one of claims 1 to 7, wherein the time slot configuration information comprises at least one of:
a period of a downlink-uplink DL-UL pattern of the base station;
a quantity of consecutive full downlink symbols at a beginning of the DL-UL pattern;
a quantity of consecutive downlink symbols following a last full downlink time slot of the DL-UL pattern;
a quantity of consecutive full uplink symbols at an end of the DL-UL pattern; and
a quantity of consecutive uplink symbols in an end of a time slot preceding a first full uplink time slot of the DL-UL pattern.

9. The time slot configuration method according to any one of claims 1 to 7, wherein the obtaining the time slot processing mode for the repeater comprises: receiving a second SIB1 sent by the base station, wherein the second SIB1 is used to indicate the time slot processing mode for the repeater; and obtaining the time slot processing mode according to the second SIB1; wherein in a condition that the time slot processing mode is the processing mode for the flexible time slot, the time slot processing mode for the repeater comprises at least one of:
no forwarding operation being performed at any of the flexible time slot;
forwarding operation being performed at each of the flexible time slot as per an uplink time slot;
forwarding operation being performed at each of the flexible time slot as per a downlink time slot; and
forwarding operation being performed at some of the flexible time slot as per an uplink time slot, and forwarding operation being performed at some of the flexible time slot as per a downlink time slot.

10. The time slot configuration method according to claim 9, further comprising: receiving a third SIB1 sent by the base station; wherein the third SIB1 is used to indicate that forwarding operation at a first time slot is performed as per the uplink time slot, and/or that forwarding operation at a second time slot is performed as per the downlink time slot, wherein the first time slot and the second time slot are any specified time slot in the flexible time slot.

11. The time slot configuration method according to any one of claims 1 to 7, wherein the configuring the time slot for the repeater according to the time slot configuration information and the time slot processing mode for the repeater comprises: determining an initial time slot for the repeater according to the time slot configuration information and the time slot processing mode for the repeater; and extending a flexible time slot in the initial time slot according to flexible time slot extension information, to obtain the time slot for the repeater.

12. The time slot configuration method according to claim 11, wherein the extending the flexible time slot in the initial time slot according to the flexible time slot extension information, to obtain the time slot for the repeater comprises: receiving second SCI or second MAC-CE sent by the base station, wherein the second SCI or the second MAC-CE carries the flexible time slot extension information; and extending the flexible time slot in the initial time slot according to the flexible time slot extension information, to obtain the time slot for the repeater; wherein the flexible time slot extension information comprises at least one of:
a total quantity of flexible time slots to be extended;
a first quantity of uplink time slots to be extended; and
a second quantity of downlink time slots to be extended.

13. The time slot configuration method according to any one of claims 1 to 7, further comprising: receiving at least one of a fourth SIB1, third SCI, and third MAC-CE sent by the base station; and determining an effective duration of the time slot configuration information according to the at least one of the fourth SIB1, the third SCI, and the third MAC-CE.

14. The time slot configuration method according to any one of claims 2 to 7, further comprising: receiving fourth SCI or fourth MAC-CE sent by the base station; and adjusting the time slot for the repeater according to the fourth SCI or the fourth MAC-CE.

15. The time slot configuration method according to claim 14, wherein the adjusting the time slot for the repeater according to the fourth SCI or the fourth MAC-CE comprises: in a condition that the time slot configuration information corresponding to the fourth SCI or the fourth MAC-CE is inconsistent with the time slot configuration information corresponding to the first SIB1, determining the time slot configuration information corresponding to the fourth SCI or the fourth MAC-CE as target time slot configuration information; and configuring the time slot for the repeater according to the target time slot configuration information and the time slot processing mode.

16. A time slot configuration method, which is **characterized by** being applied to a base station and comprising: sending at least one of a first SIB1, first MAC-CE or first SCI to a repeater, wherein the at least one of the first SIB1, the first MAC-CE or the first SCI carries time slot configuration information of the base station;
wherein the at least one of the first SIB 1, the first MAC-CE or the first SCI is used to instruct the repeater to configure a time slot for the repeater according to the time slot configuration information and a time slot processing mode, wherein the time slot processing mode comprises at least one of: a processing mode for an uplink time slot, a processing mode for a downlink time slot and a processing mode for a flexible time slot.

17. The time slot configuration method according to claim 16, wherein the sending the first SIB1 to the repeater comprises: scrambling Type0-PDCCH using an SI-RNTI; and sending the first SIB1 to the repeater through the scrambled Type0-PDCCH.

18. The time slot configuration method according to claim 16, wherein the sending the first MAC-CE or the first SCI to the repeater comprises: sending the first MAC-CE or the first SCI carrying a time slot table of the base station to the repeater, wherein the first MAC-CE or the first SCI is used to instruct the repeater to obtain the time slot configuration information of the base station;
wherein the time slot table of the base station comprises at least one of: an exclusive configuration table corresponding to the repeater, a general configuration table corresponding to the base station, or part or all of configuration rows of the general configuration table, and the time slot processing mode comprises at least one of: no flexible time slot being configured in the time slot for the repeater, no forwarding operation being performed at any flexible time slot in the time slot for the repeater, and a target row in the time slot for the repeater being used for forwarding data.

19. The time slot configuration method according to claim 16, further comprising: in a condition that a NACK sent by the repeater is received, resending the first MAC-CE or the first SCI to the repeater, wherein the NACK is used to indicate that the repeater has not received the first MAC-CE or the first SCI currently.

20. The time slot configuration method according to any one of claims 16 to 19, wherein the time slot configuration information comprises at least one of:
a period of a DL-UL pattern of the base station;
a quantity of consecutive full downlink symbols at a beginning of the DL-UL pattern;
a quantity of consecutive downlink symbols following a last full downlink time slot of the DL-UL pattern;
a quantity of consecutive full uplink symbols at an end of the DL-UL pattern; and
a quantity of consecutive uplink symbols in an end of a time slot preceding a first full uplink time slot of the DL-UL pattern.

21. The time slot configuration method according to any one of claims 16 to 19, wherein in a condition that the time slot processing mode is the processing mode for the flexible time slot, the processing mode for the flexible time slot for the repeater comprises at least one of:
no forwarding operation being performed at any of the flexible time slot;
forwarding operation being performed at each of the flexible time slot as per an uplink time slot;
forwarding operation being performed at each of the flexible time slot as per a downlink time slot; and
forwarding operation being performed at some of the flexible time slot as per an uplink time slot, and forwarding operation being performed at some of the flexible time slot as per a downlink time slot.

22. The time slot configuration method according to claim 20, further comprising: sending a third SIB1 to the repeater, wherein the third SIB1 is used to indicate that forwarding operation at a first time slot is performed as per an uplink time slot, and/or that forwarding operation at a second time slot is performed as per the downlink time slot, wherein the first time slot and the second time slot are any specified time slot in the flexible time slot.

23. The time slot configuration method according to any one of claims 16 to 19, further comprising: sending second SCI or second MAC-CE to the repeater, wherein the second SCI or the second MAC-CE carries flexible time slot extension information, and the extension information is used to instruct the repeater to extend the flexible time slot for the repeater; the extension information comprises at least one of:
a total quantity of flexible time slots to be extended;
a first quantity of uplink time slots to be extended; and
a second quantity of downlink time slots to be extended.

24. The time slot configuration method according to any one of claims 16 to 19, further comprising: sending at least one of a fourth SIB1, third SCI, and third MAC-CE to the repeater, wherein the at least one of the fourth SIB1, the third SCI, and the third MAC-CE is used to indicate an effective duration of the time slot configuration information.

25. The time slot configuration method according to any one of claims 16 to 19, further comprising: sending fourth SCI or fourth MAC-CE to the repeater, wherein the fourth SCI or the fourth MAC-CE is used to instruct the repeater to adjust the time slot for the repeater.

26. A time slot configuration apparatus, which is **characterized by** being applied to a repeater and comprising: an obtaining module, configured to obtain time slot configuration information of a base station and a time slot processing mode for the repeater; and a configuration module, configured to configure a time slot for the repeater according to the time slot configuration information and the time slot processing mode; wherein the time slot processing mode comprises at least one of: a processing mode for an uplink time slot, a processing mode for a downlink time slot, or a processing mode for a flexible time slot.

27. The time slot configuration apparatus according to claim 26, wherein the obtaining module is specifically configured to: receive a first system information block SIB1 sent by the base station; and obtain the time slot configuration information according to the first SIB 1.

28. The time slot configuration apparatus according to claim 27, wherein the obtaining module is specifically configured to: in a condition that the repeater accesses the base station, descramble Type0-PDCCH based on a preset system information-radio network temporary identifier SI-RNTI; determine physical downlink control channel PDCCH information according to the descrambled Type0-PDCCH, wherein the PDCCH information at least comprises resource location information for a physical downlink shared channel PDSCH; and receive, through a PDCCH, the first SIB1 transmitted over the PDSCH.

29. The time slot configuration apparatus according to claim 26, wherein the obtaining module is specifically configured to: receive first sidelink control information SCI or first medium access control-control element information MAC-CE sent by the base station; and obtain the time slot configuration information according to the first SCI or the first MAC-CE.

30. The time slot configuration apparatus according to claim 29, wherein the obtaining module is specifically configured to: receive SCI or MAC-CE sent by the base station; blindly check the SCI or the MAC-CE, and obtain the first SCI from the blindly checked SCI, or obtain the first MAC-CE from the blindly checked MAC-CE.

31. The time slot configuration apparatus according to claim 29, wherein the obtaining module is specifically configured to: obtain a time slot table of the base station in the first SCI or the first MAC-CE; and obtain the time slot configuration information and the time slot processing mode according to the time slot table of the base station; wherein the time slot table comprises at least one of: an exclusive configuration table corresponding to the repeater, a general configuration table corresponding to the base station, or part or all of configuration rows of the general configuration table; the time slot processing mode comprises at least one of: no flexible time slot being configured in the time slot for the repeater, no forwarding operation being performed at any flexible time slot in the time slot for the repeater, and a target row in the time slot for the repeater being used for forwarding data.

32. The time slot configuration apparatus according to claim 29, wherein the obtaining module is further configured to: send an ACK to the base station in a condition that the first SCI or the first MAC-CE sent by the base station is received; or send a NACK to the base station in a condition that the first SCI or the first MAC-CE sent by the base station is not received, wherein the NACK is used to instruct the base station to resend the first SCI or the first MAC-CE.

33. The time slot configuration apparatus according to any one of claims 26 to 32, wherein the time slot configuration information comprises at least one of: a period of a downlink-uplink DL-UL pattern of the base station; a quantity of consecutive full downlink symbols at a beginning of the DL-UL pattern;
a quantity of consecutive downlink symbols following a last full downlink time slot of the DL-UL pattern;
a quantity of consecutive full uplink symbols at an end of the DL-UL pattern; and
a quantity of consecutive uplink symbols in an end of a time slot preceding a first full uplink time slot of the DL-UL pattern.

34. The time slot configuration apparatus according to any one of claims 26 to 32, wherein the obtaining module is specifically configured to: receive a second SIB1 sent by the base station, wherein the second SIB1 is used to indicate the time slot processing mode for the repeater; and obtain the time slot processing mode according to the second SIB1; wherein in a condition that the time slot processing mode is the processing mode for the flexible time slot, the time slot processing mode for the repeater comprises at least one of: no forwarding operation being performed at any of the flexible time slot;
forwarding operation being performed at each of the flexible time slot as per an uplink time slot;
forwarding operation being performed at each of the flexible time slot as per a downlink time slot; and
forwarding operation being performed at some of the flexible time slot as per an uplink time slot, and forwarding operation being performed at some of the flexible time slot as per a downlink time slot.

35. The time slot configuration apparatus according to claim 34, wherein the obtaining module is further configured to: receive a third SIB1 sent by the base station; wherein the third SIB1 is used to indicate that forwarding operation at a first time slot is performed as per the uplink time slot, and/or that forwarding operation at a second time slot is performed as per the downlink time slot, wherein the first time slot and the second time slot are any specified time slot in the flexible time slot.

36. The time slot configuration apparatus according to any one of claims 26 to 32, wherein the configuration module is specifically configured to: determine an initial time slot for the repeater according to the time slot configuration information and the time slot processing mode for the repeater; and extend a flexible time slot in the initial time slot according to flexible time slot extension information, to obtain the time slot for the repeater.

37. The time slot configuration apparatus according to claim 36, wherein the configuration module is specifically configured to: receive second SCI or second MAC-CE sent by the base station, wherein the second SCI or the second MAC-CE carries the flexible time slot extension information; and extend the flexible time slot in the initial time slot according to the flexible time slot extension information, to obtain the time slot for the repeater; wherein the flexible time slot extension information comprises at least one of: a total quantity of flexible time slots to be extended;
a first quantity of uplink time slots to be extended; and
a second quantity of downlink time slots to be extended.

38. The time slot configuration apparatus according to any one of claims 26 to 32, wherein the obtaining module is further configured to: receive at least one of a fourth SIB1, third SCI, and third MAC-CE sent by the base station; and determine an effective duration of the time slot configuration information according to the at least one of the fourth SIB1, the third SCI, and the third MAC-CE.

39. The time slot configuration apparatus according to any one of claims 27 to 32, wherein the obtaining module is further configured to: receive fourth SCI or fourth MAC-CE sent by the base station; and adjust the time slot for the repeater according to the fourth SCI or the fourth MAC-CE.

40. The time slot configuration apparatus according to claim 39, wherein the configuration module is further configured to: in a condition that the time slot configuration information corresponding to the fourth SCI or the fourth MAC-CE is inconsistent with the time slot configuration information corresponding to the first SIB1, determine the time slot configuration information corresponding to the fourth SCI or the fourth MAC-CE as target time slot configuration information; and configure the time slot for the repeater according to the target time slot configuration information and the processing mode for the flexible time slot.

41. A time slot configuration apparatus, which is **characterized by** being applied to a base station and comprising: a sending module, configured to send at least one of a first SIB1, first MAC-CE or first SCI to a repeater, wherein the at least one of the first SIB1, the first MAC-CE or the first SCI carries time slot configuration information of the base station; wherein the at least one of the first SIB1, the first MAC-CE or the first SCI is used to instruct the repeater to configure a time slot for the repeater according to the time slot configuration information and a time slot processing mode, wherein the time slot processing mode comprises at least one of: a processing mode for an uplink time slot, a processing mode for a downlink time slot and a processing mode for a flexible time slot.

42. The time slot configuration apparatus according to claim 41, wherein the sending module is specifically configured to: scramble Type0-PDCCH using an SI-RNTI; and send the first SIB1 to the repeater through the scrambled Type0-PDCCH.

43. The time slot configuration apparatus according to claim 41, wherein the sending module is specifically configured to: send the first MAC-CE or the first SCI carrying a time slot table of the base station to the repeater, wherein the first MAC-CE or the first SCI is used to instruct the repeater to obtain the time slot configuration information of the base station; wherein the time slot table of the base station comprises at least one of: an exclusive configuration table corresponding to the repeater, a general configuration table corresponding to the base station, or part or all of configuration rows of the general configuration table, and the time slot processing mode comprises at least one of: no flexible time slot being configured in the time slot for the repeater, no forwarding operation being performed at any flexible time slot in the time slot for the repeater, and a target row in the time slot for the repeater being used for forwarding data.

44. The time slot configuration apparatus according to claim 41, wherein the sending module is further configured to: in a condition that a NACK sent by the repeater is received, resend the first MAC-CE or the first SCI to the repeater, wherein the NACK is used to indicate that the repeater has not received the first MAC-CE or the first SCI currently.

45. The time slot configuration apparatus according to any one of claims 41 to 44, wherein the time slot configuration information comprises at least one of: a period of a DL-UL pattern of the base station;
a quantity of consecutive full downlink symbols at a beginning of the DL-UL pattern;
a quantity of consecutive downlink symbols following a last full downlink time slot of the DL-UL pattern;
a quantity of consecutive full uplink symbols at an end of the DL-UL pattern; and
a quantity of consecutive uplink symbols in an end of a time slot preceding a first full uplink time slot of the DL-UL pattern.

46. The time slot configuration apparatus according to any one of claims 41 to 44, wherein in a condition that the time slot processing mode is the processing mode for the flexible time slot, the processing mode for the flexible time slot for the repeater comprises at least one of: no forwarding operation being performed at any of the flexible time slot; forwarding operation being performed at each of the flexible time slot as per an uplink time slot;
forwarding operation being performed at each of the flexible time slot as per a downlink time slot; and
forwarding operation being performed at some of the flexible time slot as per an uplink time slot, and forwarding operation being performed at some of the flexible time slot as per a downlink time slot.

47. The time slot configuration apparatus according to claim 45, wherein the sending module is further configured to: send a third SIB1 to the repeater, wherein the third SIB1 is used to indicate that forwarding operation at a first time slot is performed as per an uplink time slot, and/or that forwarding operation at a second time slot is performed as per the downlink time slot, wherein the first time slot and the second time slot are any specified time slot in the flexible time slot.

48. The time slot configuration apparatus according to any one of claims 41 to 44, wherein the sending module is further configured to: send second SCI or second MAC-CE to the repeater, wherein the second SCI or the second MAC-CE carries flexible time slot extension information, and the extension information is used to instruct the repeater to extend the flexible time slot for the repeater; the extension information comprises at least one of:
a total quantity of flexible time slots to be extended;
a first quantity of uplink time slots to be extended; and
a second quantity of downlink time slots to be extended.

49. The time slot configuration apparatus according to any one of claims 41 to 44, wherein the sending module is further specifically configured to: send at least one of a fourth SIB1, third SCI, and third MAC-CE to the repeater, wherein the at least one of the fourth SIB1, the third SCI, and the third MAC-CE is used to indicate an effective duration of the time slot configuration information.

50. The time slot configuration apparatus according to any one of claims 41 to 44, wherein the sending module is further specifically configured to: send fourth SCI or fourth MAC-CE to the repeater, wherein the fourth SCI or the fourth MAC-CE is used to instruct the repeater to adjust the time slot for the repeater.

51. A repeater, which is **characterized by** comprising:
a memory, configured to store a computer program;
a transceiver, configured to receive and send data under a control of a processor; and
the processor, configured to read the computer program in the memory and perform following operations: obtaining time slot configuration information of a base station and a time slot processing mode for the repeater; and configuring a time slot for the repeater according to the time slot configuration information and the time slot processing mode;
wherein the time slot processing mode comprises at least one of: a processing mode for an uplink time slot, a processing mode for a downlink time slot, or a processing mode for a flexible time slot.

52. The repeater according to claim 51, wherein the obtaining the time slot configuration information of the base station comprises: receiving a first SIB1 sent by the base station; and obtaining the time slot configuration information according to the first SIB1.

53. The repeater according to claim 52, wherein the receiving the first SIB1 sent by the base station comprises: in a condition that the repeater accesses the base station, descrambling Type0-PDCCH based on a preset system information-radio network temporary identifier SI-RNTI; determining physical downlink control channel PDCCH information according to the descrambled Type0-PDCCH, wherein the PDCCH information at least comprises resource location information for a physical downlink shared channel PDSCH; and receiving, through a PDCCH, the first SIB1 transmitted over the PDSCH.

54. The repeater according to claim 51, wherein the obtaining the time slot configuration information of the base station comprises: receiving first SCI or first medium access control-control element information MAC-CE sent by the base station; and obtaining the time slot configuration information according to the first SCI or the first MAC-CE.

55. The repeater according to claim 54, wherein the receiving the first SCI or the first MAC-CE sent by the base station comprises: receiving SCI or MAC-CE sent by the base station; blindly checking the SCI or the MAC-CE, and obtaining the first SCI from the blindly checked SCI, or obtaining the first MAC-CE from the blindly checked MAC-CE.

56. The repeater according to claim 54, wherein the obtaining the time slot configuration information according to the first SCI or the first MAC-CE comprises: obtaining a time slot table of the base station in the first SCI or the first MAC-CE; and obtaining the time slot configuration information and the time slot processing mode according to the time slot table of the base station;
wherein the time slot table comprises at least one of: an exclusive configuration table corresponding to the repeater, a general configuration table corresponding to the base station, or part or all of configuration rows of the general configuration table; the time slot processing mode comprises at least one of: no flexible time slot being configured in the time slot for the repeater, no forwarding operation being performed at any flexible time slot in the time slot for the repeater, and a target row in the time slot for the repeater being used for forwarding data.

57. The repeater according to claim 54, wherein the processor is further configured to: send an acknowledgement ACK to the base station in a condition that the first SCI or the first MAC-CE sent by the base station is received;
or send a negative acknowledgement NACK to the base station in a condition that the first SCI or the first MAC-CE sent by the base station is not received, wherein the NACK is used to instruct the base station to resend the first SCI or the first MAC-CE.

58. The repeater according to any one of claims 51 to 57, wherein the time slot configuration information comprises at least one of: a period of a downlink-uplink DL-UL pattern of the base station;
a quantity of consecutive full downlink symbols at a beginning of the DL-UL pattern;
a quantity of consecutive downlink symbols following a last full downlink time slot of the DL-UL pattern;
a quantity of consecutive full uplink symbols at an end of the DL-UL pattern; and
a quantity of consecutive uplink symbols in an end of a time slot preceding a first full uplink time slot of the DL-UL pattern.

59. The repeater according to any one of claims 51 to 57, wherein the obtaining the time slot processing mode for the repeater comprises: receiving a second SIB1 sent by the base station, wherein the second SIB 1 is used to indicate the time slot processing mode for the repeater; and obtaining the time slot processing mode according to the second SIB1; wherein in a condition that the time slot processing mode is the processing mode for the flexible time slot, the time slot processing mode for the repeater comprises at least one of:
no forwarding operation being performed at any of the flexible time slot;
forwarding operation being performed at each of the flexible time slot as per an uplink time slot;
forwarding operation being performed at each of the flexible time slot as per a downlink time slot; and
forwarding operation being performed at some of the flexible time slot as per an uplink time slot, and forwarding operation being performed at some of the flexible time slot as per a downlink time slot.

60. The repeater according to any one of claims 51 to 57, wherein the processor is further configured to:
receive a third SIB1 sent by the base station; wherein the third SIB1 is used to indicate that forwarding operation at a first time slot is performed as per the uplink time slot, and/or that forwarding operation at a second time slot is performed as per the downlink time slot, wherein the first time slot and the second time slot are any specified time slot in the flexible time slot.

61. The repeater according to any one of claims 51 to 57, wherein the configuring the time slot for the repeater according to the time slot configuration information and the time slot processing mode for the repeater comprises: determining an initial time slot for the repeater according to the time slot configuration information and the time slot processing mode for the repeater; and extending a flexible time slot in the initial time slot according to flexible time slot extension information, to obtain the time slot for the repeater.

62. The repeater according to any one of claim 61, wherein the extending the flexible time slot in the initial time slot according to the flexible time slot extension information, to obtain the time slot for the repeater comprises: receiving second SCI or second MAC-CE sent by the base station, wherein the second SCI or the second MAC-CE carries the flexible time slot extension information; and extending the flexible time slot in the initial time slot according to the flexible time slot extension information, to obtain the time slot for the repeater; wherein the flexible time slot extension information comprises at least one of:
a total quantity of flexible time slots to be extended;
a first quantity of uplink time slots to be extended; and
a second quantity of downlink time slots to be extended.

63. The repeater according to claim 61, wherein the processor is further configured to: receive at least one of a fourth SIB1, third SCI, and third MAC-CE sent by the base station; and determine an effective duration of the time slot configuration information according to the at least one of the fourth SIB1, the third SCI, and the third MAC-CE.

64. The repeater according to any one of claims 52 to 57, wherein the processor is further configured to: receive fourth SCI or fourth MAC-CE sent by the base station; and adjust the time slot for the repeater according to the fourth SCI or the fourth MAC-CE.

65. The repeater according to claim 64, wherein the adjusting the time slot for the repeater according to the fourth SCI or the fourth MAC-CE comprises: in a condition that the time slot configuration information corresponding to the fourth SCI or the fourth MAC-CE is inconsistent with the time slot configuration information corresponding to the first SIB1, determining the time slot configuration information corresponding to the fourth SCI or the fourth MAC-CE as target time slot configuration information; and configuring the time slot for the repeater according to the target time slot configuration information and the processing mode for the flexible time slot.

66. A base station, which is **characterized by** comprising:
a memory, configured to store a computer program;
a transceiver, configured to receive and send data under a control of a processor; and
the processor, configured to read the computer program in the memory and perform following operations: sending at least one of a first SIB1, first MAC-CE or first SCI to a repeater, wherein the at least one of the first SIB1, the first MAC-CE or the first SCI carries time slot configuration information of the base station;
wherein the at least one of the first SIB 1, the first MAC-CE or the first SCI is used to instruct the repeater to configure a time slot for the repeater according to the time slot configuration information and a time slot processing mode, wherein the time slot processing mode comprises at least one of: a processing mode for an uplink time slot, a processing mode for a downlink time slot and a processing mode for a flexible time slot.

67. The base station according to claim 66, wherein the sending the first SIB1 to the repeater comprises: scrambling Type0-PDCCH using an SI-RNTI; and sending the first SIB1 to the repeater through the scrambled Type0-PDCCH.

68. The base station according to claim 66, wherein the sending the first MAC-CE or the first SCI to the repeater comprises: sending the first MAC-CE or the first SCI carrying a time slot table of the base station to the repeater, wherein the first MAC-CE or the first SCI is used to instruct the repeater to obtain the time slot configuration information of the base station;
wherein the time slot table of the base station comprises at least one of: an exclusive configuration table corresponding to the repeater, a general configuration table corresponding to the base station, or part or all of configuration rows of the general configuration table, and the time slot processing mode comprises at least one of: no flexible time slot being configured in the time slot for the repeater, no forwarding operation being performed at any flexible time slot in the time slot for the repeater, and a target row in the time slot for the repeater being used for forwarding data.

69. The base station according to claim 66, further comprising: in a condition that a NACK sent by the repeater is received, resending the first MAC-CE or the first SCI to the repeater, wherein the NACK is used to indicate that the repeater has not received the first MAC-CE or the first SCI currently.

70. The base station according to any one of claims 66 to 69, wherein the time slot configuration information comprises at least one of: a period of a DL-UL pattern of the base station;
a quantity of consecutive full downlink symbols at a beginning of the DL-UL pattern;
a quantity of consecutive downlink symbols following a last full downlink time slot of the DL-UL pattern;
a quantity of consecutive full uplink symbols at an end of the DL-UL pattern; and
a quantity of consecutive uplink symbols in an end of a time slot preceding a first full uplink time slot of the DL-UL pattern.

71. The base station according to any one of claims 66 to 69, wherein in a condition that the time slot processing mode is the processing mode for the flexible time slot, the processing mode for the flexible time slot for the repeater comprises at least one of:
no forwarding operation being performed at any of the flexible time slot;
forwarding operation being performed at each of the flexible time slot as per an uplink time slot;
forwarding operation being performed at each of the flexible time slot as per a downlink time slot; and
forwarding operation being performed at some of the flexible time slot as per an uplink time slot, and forwarding operation being performed at some of the flexible time slot as per a downlink time slot.

72. The base station according to claim 71, wherein the processor is further configured to: send a third SIB1 to the repeater, wherein the third SIB1 is used to indicate that forwarding operation at a first time slot is performed as per an uplink time slot, and/or that forwarding operation at a second time slot is performed as per the downlink time slot, wherein the first time slot and the second time slot are any specified time slot in the flexible time slot.

73. The base station according to any one of claims 66 to 69, wherein the processor is further configured to: send second SCI or second MAC-CE to the repeater, wherein the second SCI or the second MAC-CE carries flexible time slot extension information, and the extension information is used to instruct the repeater to extend the flexible time slot for the repeater; the extension information comprises at least one of:
a total quantity of flexible time slots to be extended;
a first quantity of uplink time slots to be extended; and
a second quantity of downlink time slots to be extended.

74. The base station according to any one of claims 66 to 69, wherein the processor is further configured to: send at least one of a fourth SIB1, third SCI, and third MAC-CE to the repeater, wherein the at least one of the fourth SIB1, the third SCI, and the third MAC-CE is used to indicate an effective duration of the time slot configuration information.

75. The base station according to any one of claims 66 to 69, wherein the processor is further configured to: send fourth SCI or fourth MAC-CE to the repeater, wherein the fourth SCI or the fourth MAC-CE is used to instruct the repeater to adjust the time slot for the repeater.

76. A processor-readable storage medium, which is **characterized in that** the processor-readable storage medium stores a computer program, wherein the computer program is used to enable a processor to execute the time slot configuration method according to any one of claims 1 to 15, and/or to execute the time slot configuration method according to any one of claims 16 to 25.
